(19) **Europäisches Patentamt European Patent Office Office européen des brevets**

(11) **EP 4 675 505 A1**

(12) **EUROPEAN PATENT APPLICATION**
published in accordance with Art. 153(4) EPC

(43) Date of publication:
**07.01.2026 Bulletin 2026/02**

(21) Application number: **24777956.4**

(22) Date of filing: **25.03.2024**

(51) International Patent Classification (IPC):
**G06N 3/08** $^{(2023.01)}$      **G06N 3/04** $^{(2023.01)}$

(52) Cooperative Patent Classification (CPC):
**G06N 3/04; G06N 3/044; G06N 3/0464; G06N 3/08; G06N 3/084; G06N 3/098; G06N 20/20**

(86) International application number:
**PCT/CN2024/083483**

(87) International publication number:
**WO 2024/199168 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.03.2023  CN 202310342408**

(71) Applicant: **Sony Group Corporation Tokyo 108-0075 (JP)**

(72) Inventors:
• **SUN, Chen Beijing 100027 (CN)**
• **ZHENG, Ce Beijing 100027 (CN)**

(74) Representative: **D Young & Co LLP 3 Noble Street London EC2V 7BQ (GB)**

(54) **ELECTRONIC DEVICE AND METHOD FOR WIRELESS COMMUNICATION, AND COMPUTER-READABLE STORAGE MEDIUM**

(57)     The present application relates to an electronic device and a method for wireless communication, and a computer-readable storage medium. The electronic device for wireless communication comprises a processing circuit, wherein the processing circuit is configured to determine, according to state information reported by a user equipment within a service range of the electronic device, whether the user equipment is to cooperate with other user equipments to train a segmented model obtained by segmenting a model to be trained, so as to participate in federated learning in a non-independent way, or to independently train the model to be trained, so as to independently participate in federated learning. (FIG. 1)

**100**

Processing unit  **101**

Figure 1

## Description

This application claims priority to Chinese Patent Application No. 202310342408.6 titled "ELECTRONIC DEVICE AND METHOD FOR WIRELESS COMMUNICATION, AND COMPUTER-READABLE STORAGE MEDIUM", filed on March 31, 2023 with the China National Intellectual Property Administration (CNIPA), which is incorporated herein by reference in its entirety.

## FIELD

The present disclosure relates to the technical field of wireless communications, and in particular to an electronic apparatus and a method for wireless communications, and a computer-readable storage medium. More specifically, the present disclosure relates to conducting federated learning more efficiently.

## BACKGROUND

When performing federated learning (FL), a user equipment uploads a local learning model to a base station or server for model aggregation. In some cases (for example, the computing capability or communication capability of the user equipment is insufficient), the federated learning may not be performed effectively.

How to conduct the federated learning more effectively is a hot topic in current researches.

## SUMMARY

A brief summary of the present disclosure is given below, to provide a basic understanding of some aspects of the present disclosure. It should be understood that the following summary is not an exhaustive summary of the present disclosure. It is not intended to determine a key or important part of the present disclosure, nor does it intend to limit the scope of the present disclosure. The purpose is merely to present some concepts in a simplified form, as a preamble to a more detailed description discussed later.

According to an aspect of the present disclosure, an electronic apparatus for wireless communications is provided. The electronic apparatus includes processing circuitry, configured to: determine based on self-state information reported by a user equipment within a service scope of the electronic apparatus, in a federated learning, whether the user equipment is to cooperate with other user equipment to train a split model obtained by splitting a to-be-trained model such that the user equipment is to participate in the federated learning dependently, or the user equipment is to train the to-be-trained model independently such that the user equipment is to participate in the federated learning independently..

In an embodiment according to the present disclosure, the electronic apparatus determines whether the user equipment is to participate in the federated learning dependently or independently, enabling more efficient federated learning.

According to an aspect of the present disclosure, an electronic apparatus for wireless communications is provided. The electronic apparatus includes processing circuitry, configured to: report self-state information of the electronic apparatus to a network side apparatus servicing the electronic apparatus, for the network side apparatus to determine, in a federated learning, whether the electronic apparatus is to cooperate with other electronic apparatus to train a split model obtained by splitting a to-be-trained model such that the electronic apparatus is to participate in the federated learning dependently, or the electronic apparatus is to train the to-be-trained model independently such that the electronic apparatus is to participate in the federated learning independently.

In an embodiment according to the present disclosure, the electronic apparatus reports the self-state information of the electronic apparatus to the network side apparatus, for the network side apparatus to determine whether the electronic apparatus is to participate in the federated learning dependently or independently, enabling more efficient federated learning.

According to an aspect of the present disclosure, an electronic apparatus for wireless communications is provided. The electronic apparatus includes processing circuitry, configured to: report self-state information of the electronic apparatus to a network side apparatus servicing the electronic apparatus, for the network side apparatus to determine, in a federated learning, whether the electronic apparatus is able to cooperate with other electronic apparatus to train a split model obtained by splitting a to-be-trained model such that the other electronic apparatus is to participate in the federated learning dependently, or the other electronic apparatus is to train the to-be-trained model independently such that the other electronic apparatus is to participate in the federated learning independently.

In an embodiment according to the present disclosure, the electronic apparatus reports the self-state information of the electronic apparatus to the network side apparatus, for the network side apparatus to determine whether the other electronic apparatus is to participate in the federated learning dependently or independently, enabling more efficient federated learning.

According to an aspect of the present disclosure, a wireless communication system is provided. The wireless communication system includes the electronic apparatuses as described above.

According to an aspect of the present disclosure, a method for wireless communications is provided. The method includes: determining based on self-state information reported by a user equipment within a service scope of an electronic apparatus, in a federated learning, whether the user equipment is to cooperate with other user equipment to train a split model obtained by splitting a to-be-trained model such that the user equipment is to participate in the federated learning dependently, or the user equipment is to train the to-be-trained model independently such that the user equipment is to participate in the federated learning independently.

According to an aspect of the present disclosure, a method for wireless communications is provided. The method includes: reporting self-state information of an electronic apparatus to a network side apparatus servicing the electronic apparatus, for the network side apparatus to determine, in a federated learning, whether the electronic apparatus is to cooperate with other electronic apparatus to train a split model obtained by splitting a to-be-trained model such that the electronic apparatus is to participate in the federated learning dependently, or the electronic apparatus is to train the to-be-trained model independently such that the electronic apparatus is to participate in the federated learning independently.

According to an aspect of the present disclosure, a method for wireless communications is provided. The method includes: reporting self-state information of an electronic apparatus to a network side apparatus servicing the electronic apparatus, for the network side apparatus to determine, in a federated learning, whether the electronic apparatus is able to cooperate with other electronic apparatus to train a split model obtained by splitting a to-be-trained model such that the other electronic apparatus is to participate in the federated learning dependently, or the other electronic apparatus is to train the to-be-trained model independently such that the other electronic apparatus is to participate in the federated learning independently.

According to other aspects of the present disclosure, there are further provided a computer program code and a computer program product for implementing the above-described methods for wireless communication, and a computer-readable storage medium having the computer program code for implementing the method for wireless communications recorded thereon.

## BRIEF DESCRIPTION OF THE DRAWINGS

For a further illustration of the above and other advantages and features of the present disclosure, embodiments of the present disclosure are described in detail hereinafter in conjunction with accompanying drawings. The drawings, together with the detailed description below, are incorporated into and form a part of the specification. Elements having the same function and structure are denoted by same reference signs. It should be noted that the drawings illustrate merely typical embodiments of the present disclosure and should not be construed as a limitation to the scope of the present disclosure. In the drawings:

Figure 1 shows a block diagram of functional modules of an electronic apparatus for wireless communications according to an embodiment of the present disclosure;

Figure 2 is a diagram illustrating an example of a federated learning network;

Figure 3 is a diagram illustrating an example of split learning according to an embodiment of the present disclosure;

Figure 4 is a diagram illustrating an example of different split points according to an embodiment of the present disclosure;

Figure 5 is a diagram illustrating an example of a structure of a federated learning network according to an embodiment of the present disclosure;

Figure 6 shows a block diagram of functional modules of an electronic apparatus for wireless communications according to another embodiment of the present disclosure;

Figure 7 shows a block diagram of functional modules of an electronic apparatus for wireless communications according to a further embodiment of the present disclosure;

Figure 8 shows a flow chart of a method for wireless communications according to an embodiment of the present disclosure;

Figure 9 shows a flow chart of a method for wireless communications according to another embodiment of the present disclosure;

Figure 10 shows a flow chart of a method for wireless communications according to a further embodiment of the present disclosure;

Figure 11 is a block diagram showing a first example of a schematic configuration of an eNB or gNB to which the technology of the present disclosure is applicable;

Figure 12 is a block diagram showing a second example of a schematic configuration of an eNB or gNB to which the technology of the present disclosure is applicable;

Figure 13 is a block diagram showing an example of a schematic configuration of a smart phone to which the technology of the present disclosure is applicable;

Figure 14 is a block diagram showing an example of a schematic configuration of an automobile navigation device to which the technology of the present disclosure is applicable; and

Figure 15 is a block diagram of an exemplary structure of a universal personal computer in which the methods and/or apparatuses and/or systems according to the embodiments of the present disclosure is applicable.

**DETAILED DESCRIPTION**

Hereinafter, exemplary embodiments of the present disclosure will be described in conjunction with the accompanying drawings. For the sake of clarity and conciseness, not all features of an actual embodiment are described in the specification. However, it is to be appreciated that numerous implementation-specific decisions shall be made while implementing any of such actual embodiments so as to achieve specific objectives of a developer, for example, to comply with system- and business-related constraining conditions which vary from one implementation to another. Furthermore, it should be understood that the development work, although may be complicated and time-consuming, is only a routine task for those skilled in the art benefiting from the present disclosure.

Here, it should be further noted that in order to avoid obscuring the present disclosure due to unnecessary details, only apparatus structures and/or processing steps closely related to the solutions according to the present disclosure are illustrated in the drawings, and other details less related to the present disclosure are omitted.

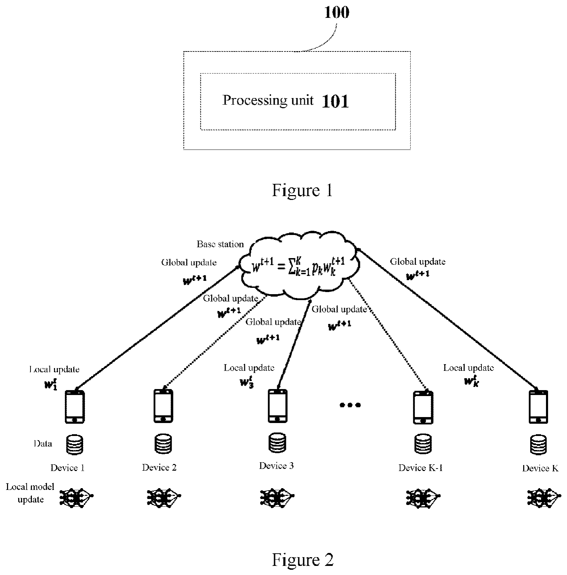

Figure 1 shows a block diagram of functional modules of an electronic apparatus 100 for wireless communications according to an embodiment of the present disclosure.

As shown in Figure 1, the electronic apparatus 100 includes a processing unit 101. The processing unit 101 may be configured to: determine based on self-state information reported by a user equipment within a service scope of the electronic apparatus 100, in a federated learning, whether the user equipment is to cooperate with other user equipment to train a split model obtained by splitting (segmenting) a to-be-trained model such that the user equipment is to participate in the federated learning dependently, or the user equipment is to train the to-be-trained model independently such that the user equipment is to participate in the federated learning independently.

The processing unit 101 may be implemented by one or more processing circuits. The processing circuitry may be implemented as a chip, for example.

The electronic apparatus 100 may serve as a network side apparatus in a wireless communication system, and may be specifically provided on a base station side or be communicatively connected to a base station, for example. Here, it should be noted that the electronic apparatus 100 may be implemented at a chip level or at an apparatus level. For example, the electronic apparatus 100 may operate as the base station itself and may further include a memory, a transceiver (not shown), and other external devices. The memory may store related data information and programs that the base station needs to execute to achieve various functions. The transceiver may include one or more communication interfaces to support communications with different devices (such as user equipment (UE), another base station, and the like). An implementation of the transceiver is not specifically limited here.

As an example, the network side apparatus may be a base station, which may be an eNB or gNB, for example.

As an example, the network side apparatus may be a server.

The wireless communication system according to the present disclosure may be a 5G NR (New Radio) communication system. Further, the wireless communication system according to the present disclosure may include a non-terrestrial network (NTN). Alternatively, the wireless communication system according to the present disclosure may further include a terrestrial network (TN). In addition, those skilled in the art may understand that the wireless communication system according to the present disclosure may be a 4G or 3G communication system.

As an example, the to-be-trained model may be a deep learning model, such as at least one of RNN (recurrent neural network), CNN (convolutional neural network), and ANN (artificial neural network). Hereinafter, the to-be-trained model is sometimes referred to as a model, for simplicity.

For example, the user equipment estimates self-state information $Info_U$ and reports the self-state information to the electronic apparatus 100.

Figure 2 is a diagram illustrating an example of a federated learning network.

As shown in Figure 2, it is assumed that there are K (where K is a positive integer greater than 1) user equipment (Device 1, Device 2, Device 3, . . . , Device K-1, and Device K). A federated learning process of the federated learning network is as follows: (1) each user equipment accesses a server (Server) or a base station through a wireless channel (the following description is made with the base station as an example, for simplicity), and obtains a parameter ($w^0$) of an initial global model as a parameter $w_1^0 = w_2^0 = \cdots = w_K^0 = w^0$ of an initial local model through downlink transmission, where $w_k^0$ represents a parameter of an initial local model of device k (k=1,2,...,K). Hereinafter, the parameter of the global model is sometimes referred to as the global model, and the parameter of the local model is sometimes referred to as the local model, for simplicity; (2) each user equipment performs learning by using data stored locally and completes an iterative update of the local model (local update):

$$w_k^{t+1} = w_k^t - \eta \cdot g_k^t, \quad g_k^t = \nabla F_k(w_k^t)$$

, where $w_k^t$ represents a local model of device k at time instant t, $g_k^t$ represents a gradient of a local model of device k, $w_k^{t+1}$ represents a local model of device k at time instant t+1, $\eta$ represents a predetermined parameter, and $F_k(w_k^t)$ represents a loss function of a local model of device k; (3) each user equipment uploads the learned local model $w_k^{t+1}$ or gradient $g_k^t$ to the base station via an uplink; (4) the base station aggregates local models collected from the user equipment to complete a global model aggregation

$$w^{t+1} = \sum_{k=1}^{K} p_k w_k^{t+1}$$

, where $p_k$ represents a weight coefficient corresponding to a local model of device k, which is usually set to $p_k = \dfrac{D_k}{\sum_{i=1}^{K} |D_i|}$, and $D_k$ represents the number of local samples of device k; and (5) the base station issues the updated global model (aggregated global model) $w^{t+1}$ to each user equipment (global update). Process (2) to (5) is repeated until the global model converges.

For example, the to-be-trained model corresponds to the initial global model or the updated global model involved in Figure 2.

A user equipment that participates in the federated learning independently may be referred to as a standalone member in the federated learning. In addition, a non-standalone member in the federated learning is defined. The non-standalone member includes a UE that participates in the federated learning dependently and other user equipment that cooperate with the UE, as mentioned above. The other user equipment that forms the non-standalone member with the UE may be referred to as an assistant equipment (AE). For example, the assistant equipment may be a peripheral device of the UE. Hereinafter, the standalone member and the non-standalone member are sometimes collectively referred to as members.

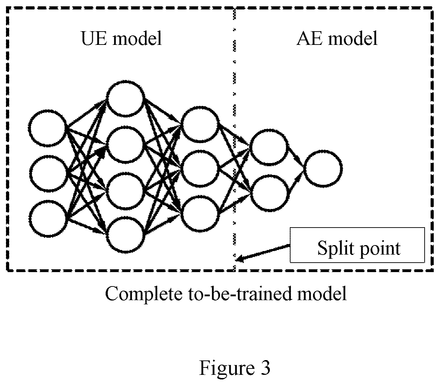

Figure 3 is a diagram illustrating an example of split learning according to an embodiment of the present disclosure. In the split learning (segmentation learning), a to-be-trained model is split to obtain a split model and the split model is trained.

A model topology is established first. As shown in Figure 3, the complete to-be-trained model is, for example, split into two parts at a split point, including a front layer model on the left (the first split model) and a back layer model on the right (the second split model). Assuming that the UE trains the first split model and the AE trains the second split model, for simplicity, the first split model may be referred to as a UE model, and the second split model may be referred to as an AE model. That is, the complete to-be-trained model is split between UE and AE, and is split into a UE model and an AE model. It should be noted that, although Figure 3 shows that the model is split into two parts, those skilled in the art shall appreciate that the model may be split into other integer numbers of parts.

At the beginning of training, training parameters for the UE model and the AE model are randomly initialized.

During the training process, the UE performs forward calculation on the UE model based on local data, and sends the local label (Label) and intermediate data #1 (e.g., an output tensor of the UE model) obtained through the forward calculation to the AE. After obtaining intermediate data #1, the AE continues to perform forward calculation on the AE model, and performs backward gradient calculation based on the uploaded label, to obtain a gradient corresponding to the AE model, and updates a parameter of the AE model based on the obtained gradient. The AE sends intermediate data #2, such as the gradient of the AE model, back to the UE, and the UE continues to perform backward calculation to obtain a gradient corresponding to the UE model. The UE updates the parameter of the UE model based on the gradient corresponding to the UE model. The process repeats until the model converges. In summary, 1) UE first runs the UE model (executes a forward propagation algorithm) and transmits the obtained the intermediate data #1 to AE; 2) AE uses the received intermediate data #1 as an input to the AE model, runs the forward propagation algorithm first to obtain an intermediate result, and then, based on the intermediate result, runs a backward propagation algorithm to obtain the intermediate data #2 (for example, the gradient of the AE model) and updates the AE model, and AE transmits the intermediate data #2 back to UE; and 3) UE runs the backward propagation algorithm based on the intermediate data #2 and update the UE model. The process (1) to (3) may be repeated several times in each round of global training of the federated learning.

In a case of broadcast, the UE may first perform complete update of a local model one or more times, and then send the updated AE model to the AE for split learning, so that a privacy protection of the UE local data is improved.

In a case where the user equipment is a standalone member, the user equipment does not participate in the split learning, but independently trains the complete to-be-trained model locally. The trained local model and trained local models of other members are subject to global model aggregation for federated learning. Alternatively, the user equipment and the AE may form as the non-standalone member to perform split learning on the to-be-trained model locally, and the trained local model of the non-standalone member and the trained local model of the other member are subject to global model aggregation for federated learning.

Both the standalone member and the non-standalone member may be equivalent to clients in a traditional federated learning network. Compared with clients in the traditional federated learning network, the non-standalone member further includes the AE in addition to the UE. By splitting the to-be-trained model, part of the model that originally needed to be trained on the UE side is placed on the AE side and completed by the AE.

In the embodiment according to the present disclosure, the electronic apparatus 100 determines whether the user equipment is to participate in the federated learning dependently or independently, enabling more efficient federated learning. For example, the computing or communication is heterogeneous for different UEs participating in the federated learning. Some UEs carry important data but have insufficient computing or communication capability, while some UEs have strong computing and communication capability. For example, for a UE with insufficient computing or communication capability, the UE may cooperate with other user equipment (AE) to train the split model, so that the burden on the UE in participating in the federated learning is reduced. A UE with strong computing and communication capability may complete the training of the to-be-trained model independently locally without cooperating with other user equipment (AE). In addition, the computing or communication resources of the AE in the communication network can be fully utilized. In addition, the number of users participating in the federated learning that can be supported by the electronic apparatus 100 is usually limited, and therefore selection of the UE is necessary before starting the federated learning. An apparatus which is not selected but still tends to participate in the federated learning (contribute to the federated learning) may participate in training as an AE. For the non-standalone member, the AE only has part of the model parameter of the to-be-trained model, and the intermediate data is transmitted between the UE and the AE, so that data privacy and security is ensured, that is, protection of data privacy is further improved.

For example, the AE may be an apparatus with a considerable computing capability in the communication network. For example, when a mobile phone serves as a UE, a vehicle and an unmanned aerial vehicle (UAV) may serve as AEs. When a vehicle serves as a UE, a roadside unit (RSU) may serve as an AE.

As an example, the self-state information of the user equipment includes first channel state information of a link between the user equipment and the electronic apparatus 100, and the processing unit 101 may be configured to determine that the user equipment is to participate in the federated learning dependently, in a case that a value of the first channel state information is less than a first predetermined threshold.

For example, the first predetermined threshold may be set by those skilled in the art based on experience or an application scenario.

As an example, the first channel state information includes at least one of a signal to interference and noise ratio (SINR), a reference signal received power (RSRP), a reference signal received quality (RSRQ), and a reference signal received intensity (RSRI) of an uplink between the user equipment and the electronic apparatus 100.

Taking SINR as an example, when the SINR of the uplink is less than the first predetermined threshold, it is determined that the user equipment and other user equipment form as the non-standalone member to participate in the federated learning.

As an example, the self-state information of the user equipment includes computing and storage capability information of the user equipment, and the processing unit 101 may be configured to determine that the user equipment is to participate in the federated learning dependently, in a case where a storage space size indicated by the computing and storage capability information is less than a size of the to-be-trained model, and/or a computing capability indicated by the computing and storage capability information is less than a computing capability required for training the to-be-trained model. That is, in the above-described case, it is determined that the user equipment and the other user equipment form as the non-standalone member to participate in the federated learning.

As an example, the computing and storage capability information includes at least one of a CPU occupancy rate and a memory size of the user equipment.

As an example, the self-state information of the user equipment includes local data information of the user equipment, and the processing unit 101 may be configured to determine that the user equipment is to participate in the federated learning dependently in a case where a training time required for the user equipment to train the to-be-trained model is greater than a second predetermined threshold, where the training time is obtained based on the local data information and the computing and storage capability information of the user equipment. That is, in a case where the training time is greater than the second predetermined threshold, it is determined that the user equipment and the other user equipment form as the non-standalone member to participate in the federated learning.

For example, the second predetermined threshold may be set by those skilled in the art based on experience or an application scenario.

As an example, the local data information includes the number of training samples and a sample dimension which are to be used by the user equipment when participating in the federated learning independently.

As an example, the self-state information of the user equipment includes battery level information of the user equipment, and the processing unit 101 may be configured to determine that the user equipment is to participate in the federated learning dependently, in a case that a battery level indicated by the battery level information is less than a third predetermined threshold. That is, in a case where the battery level indicated by the battery level information is less than the third predetermined threshold, it is determined that the user equipment and the other user equipment form as the non-standalone member to participate in the federated learning.

For example, the third predetermined threshold may be set by those skilled in the art based on experience or an application scenario.

As an example, the self-state information of the user equipment includes location information of the user equipment, and the processing unit 101 may be configured to determine that the user equipment is to participate in the federated learning independently, on determining based on the location information that there is no other user equipment within a predetermined range of the user equipment. That is, on determining that there is no other user equipment within the predetermined range of the user equipment, it is determined that the user equipment is to serve as the standalone member to participate in the federated learning.

For example, the predetermined range may be set by those skilled in the art based on experience or an application scenario.

As an example, the self-state information of the user equipment includes mobility information of the user equipment, and the processing unit 101 may be is configured to determine that the user equipment is to participate in the federated learning independently, on determining based on the mobility information that the user equipment has high mobility. That is, on determining that the user equipment has high mobility, it is determined that the user equipment is to serve as the standalone member to participate in the federated learning.

As an example, the mobility information includes at least one of a moving speed, a moving direction, and a dwell time of the user equipment.

As an example, the processing unit 101 may be configured to select a to-be-cooperated user equipment for cooperative training with the user equipment based on second channel state information of a sidelink between the user equipment and other user equipment within a predetermined range of the user equipment, on determining that the user equipment is to participate in the federated learning dependently. That is, the to-be-cooperated user equipment is not constant for the user equipment. For example, the to-be-cooperated user equipment is the above-mentioned AE.

As an example, the processing unit 101 may be configured to select, as the to-be-cooperated user equipment, other user equipment satisfying that a value of second channel state information of a sidelink corresponding to the other user equipment is greater than a fourth predetermined threshold (AE selection condition 1).

For example, the fourth predetermined threshold may be set by those skilled in the art based on experience or an application scenario.

As an example, the second channel state information includes at least one of a signal to interference and noise ratio (SINR), a reference signal received power (RSRP), a reference signal received quality (RSRQ), and a reference signal received intensity (RSRI) of the sidelink.

As an example, the processing unit 101 may be configured to select, based on the second channel state information, other user equipment (AE) satisfying the following condition as the to-be-cooperated user equipment: via a sidelink corresponding to the other user equipment, the user equipment (UE) is allowed to transmit model data related to a split model corresponding to the user equipment to the other user equipment within a first predetermined time range, and/or the other user equipment is allowed to transmit model data related to a split model corresponding to the other user equipment to the user equipment within a second predetermined time range (AE selection condition 2).

As an example, the model data related to a split model corresponding to the UE may be the intermediate data #1 described with reference to Figure 3, and the model data related to a split model corresponding to the AE may be the intermediate data #2 described with reference to Figure 3.

For example, the first predetermined time range (for example, represented by $t_1$) and/or the second predetermined time range (for example, represented by $t_2$) may be set by those skilled in the art based on experience or an application scenario.

As an example, the processing unit 101 may be configured to determine, based on the second channel state information, a split point for splitting the to-be-trained model and obtaining the split model, in a case where the to-be-cooperated user equipment (AE) is selected. The split point may include one or more split points. It should be noted that although it is described here that the split point is determined after the to-be-cooperated user equipment (AE) is selected, the to-be-cooperated user equipment (AE) may be selected after the split point is determined. The selection conditions in this case may include, for example, the AE selection condition 1 and/or the AE selection condition 2 as described above.

For example, for the non-standalone member, the split point between the UE and the AE is determined in advance by the electronic apparatus 100 based on the second channel state information.

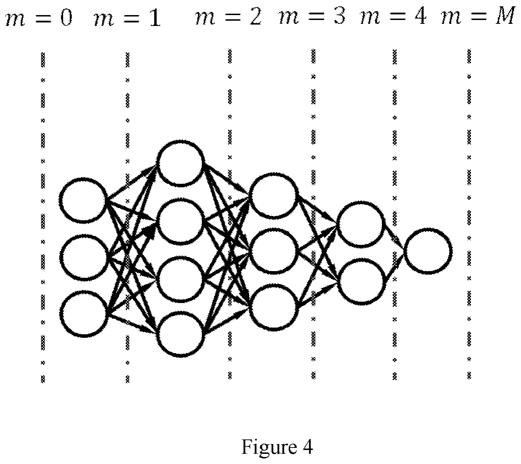

Figure 4 is a diagram illustrating an example of different split points according to an embodiment of the present disclosure.

It is assumed that the to-be-trained model (such as a neural network) has M layers, and m represents a position of a split point. here, m=0 means that the to-be-trained model is completely unloaded to the AE (the to-be-trained model is completely trained at AE), and m=M means that the to-be-trained model is not split and is completely trained at the UE. Figure 4 provides an example under a condition of M=5.

For the non-standalone member, there are the following cases. 1). When m=0, the to-be-trained model is completely unloaded to the AE. The AE end may not have data, and the UE needs to transmit original data to the AE, and only one transmission is required during the entire training process (for example, without additional notification from the electronic apparatus 100). After completing the local training, the AE may transmit the trained model back to the UE. The UE uploads the trained local model to the electronic apparatus 100 (for example, in a situation where an uplink state of the UE is good and an uplink state of the AE is poor). Alternatively, the AE may upload the model directly to the electronic apparatus 100. 2) When m=M, the to-be-trained model is to be completely trained at the UE, and the AE only acts as a relay. 3). When 0<m<M, the UE and the AE transmit intermediate data to each other through a sidelink for split learning.

As an example, the processing unit 101 may be configured to enable the determined split point to satisfy the following condition: via a sidelink between the user equipment (UE) and the to-be-cooperated user equipment (AE), the user equipment is allowed to transmit model data related to a split model corresponding to the user equipment to the to-be-cooperated user equipment within a first predetermined time range, and/or the to-be-cooperated user equipment is allowed to transmit model data related to a split model corresponding to the to-be-cooperated user equipment to the user equipment within a second predetermined time range. For example, the model data related to a split model corresponding to the UE may be the intermediate data #1 described with reference to Figure 3, and the model data related to a split model corresponding to the AE may be the intermediate data #2 described with reference to Figure 3.

As an example, the self-state information of the user equipment includes second channel state information of a sidelink between the user equipment and the other user equipment within a predetermined range of the user equipment. Since the sidelink between the UE and the AE changes over time, it is necessary to make dynamic decisions on federated learning based on changes in the sidelink. For example, whether the UE participates in the federated learning as a standalone member or a non-standalone member, which AE the UE forms a non-standalone member with, a location of a split point, and the like, are to be dynamically decided based on changes in the sidelink.

As an example, the processing unit 101 may be configured to determine that the user equipment is to participate in the federated learning dependently, in a case that there is other user equipment within the predetermined range whose value of second channel state information is greater than a fifth predetermined threshold.

For example, the fifth predetermined threshold may be set by those skilled in the art based on experience or an application scenario.

As an example, the processing unit 101 may be configured to determine that the user equipment is to participate in the federated learning independently, in a case that second channel state information corresponding to other user equipment within the predetermined range is all less than or equal to the fifth predetermined threshold.

As an example, the second channel state information includes at least one of a signal to interference and noise ratio (SINR), a reference signal received power (RSRP), a reference signal received quality (RSRQ), and a reference signal received intensity (RSRI) of the sidelink.

As an example, the processing unit 101 may be configured to determine that the user equipment (UE) is to participate in the federated learning dependently, on determining based on the second channel state information that there is other user equipment (AE) satisfying the following condition: via a sidelink corresponding to the other user equipment, the user equipment is allowed to transmit model data related to a split model corresponding to the user equipment to the other user equipment within a first predetermined time range, and the other user equipment is allowed to transmit model data related to a split model corresponding to the other user equipment to the user equipment within a second predetermined time range. For example, the model data related to a split model corresponding to the UE may be the intermediate data #1 described with reference to Figure 3, and the model data related to a split model corresponding to the AE may be the intermediate data #2 described with reference to Figure 3.

As an example, the processing unit 101 may be configured to determine that the user equipment is to participate in the federated learning independently, on determining based on the second channel state information that there is no other user equipment satisfying the following condition: via a sidelink corresponding to the other user equipment, the user equipment is allowed to transmit model data related to a split model corresponding to the user equipment to the other user equipment within a first predetermined time range, and the other user equipment is allowed to transmit model data related to a split model corresponding to the other user equipment to the user equipment within a second predetermined time range.

As an example, the processing unit 101 may be configured to transmit information about the federated learning to the user equipment (UE) and a to-be-cooperated user equipment (AE) for cooperative training with the user equipment, on determining that the user equipment is to participate in the federated learning dependently and the to-be-cooperated user equipment is selected. For example, information about the federated learning includes the to-be-trained model and a split point of the to-be-trained model.

As an example, the processing unit 101 may be configured to broadcast, to the user equipment and the to-be-cooperated user equipment, the to-be-trained model and split point(s) for splitting the to-be-trained model and obtaining the split model. For example, the electronic apparatus 100 broadcasts a global model (for example, an initial global model and an updated global model) and the split point(s) to the UE and the AE in the non-standalone member. In this case, the UE and the AE both have a complete global model and only need to locally train and update corresponding parts of the global model respectively based on the split point(s).

As an example, the processing unit 101 may be configured to: transmit, to the user equipment, a split model corresponding to the user equipment; and transmit, to the to-be-cooperated user equipment, a split model corresponding to the to-be-cooperated user equipment. The global model may be issued in a point-to-point manner, that is, the electronic apparatus 100 may separately allocate downlink resources to the UE and the AE, so as to send split global models respectively.

As an example, the processing unit 101 may be configured to notify the user equipment (UE) and the to-be-cooperated user equipment (AE) to report trained split models respectively, and the trained split models are spliced by the electronic apparatus 100 to obtain a trained complete model. For example, with reference to Figure 3, after the UE and the AE in the non-standalone member complete the split learning, the trained UE model is uploaded by the UE to the electronic apparatus 100, and the trained AE model is uploaded by the AE to the electronic apparatus 100. The trained AE model and the trained UE model are spliced at the electronic apparatus 100 to obtain a trained complete model.

As an example, the processing unit 101 may be configured to notify the user equipment or the to-be-cooperated user equipment to: splice trained split models to obtain a trained complete model, and report the trained complete model to the electronic apparatus 100. For example, after the UE and the AE in the non-standalone member complete the split learning, the trained split models are spliced by one of the UE or the AE, and then uploaded to the electronic apparatus 100. For example, the AE transmits the trained AE model to the UE via the sidelink. After completing splicing of the trained UE model and the trained AE model, the UE uploads the trained complete model to the electronic apparatus 100. In addition, for example, the UE transmits the trained UE model to the AE via the sidelink. After completing splicing of the trained UE model and the trained AE model, the AE uploads the trained complete model to the electronic apparatus 100.

As an example, the processing unit 101 may be configured to notify the user equipment and the to-be-cooperated user equipment of information about a sidelink between the user equipment and the to-be-cooperated user equipment.

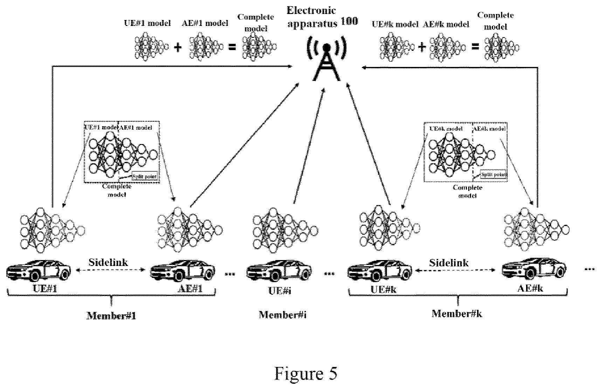

Figure 5 is a diagram illustrating an example of a structure of a federated learning network according to an embodiment of the present disclosure.

Figure 5 shows a structural example of a federated learning network by way of an example of a vehicle-to-everything (V2X) network. As shown in Figure 5, in such distributed network, multiple members perform federated learning training together with the electronic apparatus 100.

In Figure 5, some member may be formed by only a single UE (for example, Member#i is formed by only UE#i). Such member is referred to as standalone member. In this case, the complete to-be-trained model is trained at the UE.

In Figure 5, some member may be formed by a single UE and nearby AE(s), and such member is referred to as non-standalone member. In this case, the complete to-be-trained model (i.e., the complete model) is split between the UE and the AE, for example, is split into a UE model and an AE model. For example, Member#1 is formed by UE#1 and AE#1, and the complete to-be-trained model is split into a UE#1 model corresponding to UE#1 (the left part of the complete model) and an AE#1 model corresponding to AE#1 (the right part of the complete model). The UE#1 model and the AE#1 model are spliced to form a complete to-be-trained model. For example, Member#k is formed by UE#k and AE#k, and the complete to-be-trained model is split into a UE#k model corresponding to UE#k (the left part of the complete model) and an AE#k model corresponding to AE#k (the right part of the complete model). The UE#k model and the AE#k model are spliced to form a complete to-be-trained model. In addition, for different non-standalone members, the split point between the UE model and the AE model may be different. For example, with reference to Figure 4, the split point corresponding to Member#1 is at m=2, and the split point corresponding to Member#k is at m=3.

Before the federated learning training begins, an apparatus in the network (such as an apparatus capable of participating in the federated learning as a UE or an AE) reports self-state information to the electronic apparatus 100. By way of example and not limitation, the electronic apparatus 100 may perform at least some of the following operations based on the self-state information uploaded by each apparatus: 1). selecting a UE (determine whether the UE is to participate in the federated learning); 2). on determining that the UE is to participate in the federated learning, determining whether the UE is to participate in the federated learning as a standalone member or a non-standalone member; 3). in a case where the UE is to participate in the federated learning as a non-standalone member, it is necessary to select an AE to cooperate with the UE and determine a split point of the to-be-trained model; 4). allocating uplink transmission resources to the standalone member, allocating uplink transmission resources and sidelink transmission resources to the UE and the AE in the non-standalone member, and determining how to upload a trained UE model and a trained AE model to the electronic apparatus 100. During the training process of federated learning, steps 1) to 4) may be repeated, that is, the UE may be re-selected.

The following briefly describes an example of a training process of the federated learning network in Figure 5. 1). The electronic apparatus 100 initializes parameter(s) of a global model and issues the global model. 2). The standalone member that receives the global model performs training and updating of a local model based on local data, and then uploads the updated local model to the electronic apparatus 100. The non-standalone member trains and updates a local model based on local data of the UE (split learning is performed between the UE and the AE, and intermediate data is transmitted to each other through the sidelink). Then, the updated local model is uploaded to the electronic apparatus 100. 3). After local models uploaded by all members are received, the electronic apparatus 100 performs global model aggregation and issues the aggregated global model to each member. 4). steps 2) to 3) are repeated several times until the trained global model converges.

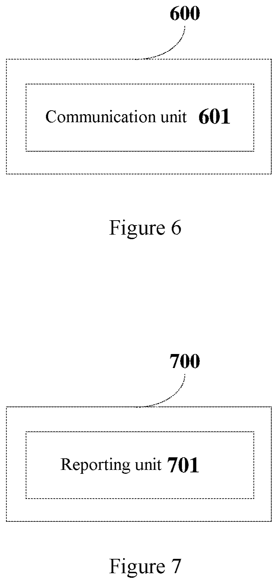

An electronic apparatus for wireless communications is further provided according to another embodiment of the present disclosure. Figure 6 shows a block diagram of functional modules of an electronic apparatus 600 for wireless communications according to another embodiment of the present disclosure.

As shown in Figure 6, the electronic apparatus 600 includes a communication unit 601. The communication unit 601 may be configured to: report self-state information of the electronic apparatus 600 to a network side apparatus servicing the electronic apparatus 600, for the network side apparatus to determine, in a federated learning, whether the electronic apparatus 600 is to cooperate with other electronic apparatus to train a split model obtained by splitting a to-be-trained model such that the electronic apparatus is to participate in the federated learning dependently, or the electronic apparatus is to train the to-be-trained model independently such that the electronic apparatus is to participate in the federated learning independently.

The communication unit 601 may be implemented by one or more processing circuits. The processing circuitry may be implemented as a chip, for example.

The electronic apparatus 600 may, for example, be provided on a user equipment (UE) side or be communicatively connected to the user equipment. Here, it should be noted that the electronic apparatus 600 may be implemented at a chip level or at an apparatus level. For example, the electronic apparatus 600 may operate as the user equipment itself and may further include a memory, a transceiver (not shown), and other external devices. The memory may store related data information and programs that the user equipment needs to execute to achieve various functions. The transceiver may include one or more communication interfaces to support communications with different devices (such as a base station, another UE, and the like). An implementation of the transceiver is not specifically limited here.

As an example, the network side apparatus may be the electronic apparatus 100 as mentioned above. As an example, the electronic apparatus 600 may be the UE involved in the above embodiments of the electronic apparatus 100, and the other electronic apparatus to cooperate with the electronic apparatus 600 may be the AE involved in the above embodiments of the electronic apparatus 100.

The wireless communication system according to the present disclosure may be a 5G NR communication system. Further, the wireless communication system according to the present disclosure may include a non-terrestrial network. Alternatively, the wireless communication system according to the present disclosure may further include a terrestrial network. In addition, those skilled in the art may understand that the wireless communication system according to the present disclosure may be a 4G or 3G communication system.

For example, the electronic apparatus 600 estimates self-state information $Info_U$ and reports the self-state information to the network side apparatus.

For details of the federated learning, the to-be-trained model and the split learning, reference may be made to the description in conjunction with Figure 2 and Figure 3 in the embodiments of the electronic apparatus 100, which is not repeated here.

The electronic apparatus 600 may serve as a standalone member. In this case, the electronic apparatus 600 does not participate in the split learning, but independently trains the complete to-be-trained model locally. The trained local model of the electronic apparatus 600 and trained local models of other members are subject to global model aggregation for federated learning. Alternatively, the electronic apparatus 600 and the AE may form as the non-standalone member to perform split learning on the to-be-trained model locally, and the trained local model of the non-standalone member and the trained local model of the other member are subject to global model aggregation for federated learning.

In an embodiment according to the present disclosure, the electronic apparatus 600 reports the self-state information of the electronic apparatus 600 to the network side apparatus, for the network side apparatus to determine whether the electronic apparatus 600 is to participate in the federated learning dependently or independently, enabling more efficient federated learning. For example, the computing or communication is heterogeneous for different electronic devices participating in the federated learning. Some electronic apparatuses carry important data but have insufficient computing or communication capability, while some electronic apparatuses have strong computing and communication capability. For example, for an electronic apparatus with insufficient computing or communication capability, the electronic apparatus may cooperate with other electronic apparatus to train the split model, so that the burden on the electronic apparatus in participating in the federated learning is reduced. An electronic apparatus with strong computing and communication capability may complete the training of the to-be-trained model independently locally without cooperating with other electronic apparatus. In addition, the computing or communication resources of other electronic apparatus in the communication network can be fully utilized. In addition, the number of users participating in the federated learning that can be supported by the network side apparatus is usually limited, and therefore selection of the electronic apparatus is necessary before starting the federated learning. An apparatus which is not selected but still tends to participate in the federated learning (contribute to the federated learning) may participate in training as other electronic apparatus. For the non-standalone member, the other electronic apparatus only has part of the model parameter of the to-be-trained model, and the intermediate data is transmitted between the electronic apparatus and other electronic apparatus, so that data privacy and security is ensured, that is, protection of data privacy is further improved.

As an example, the self-state information of the electronic apparatus 600 includes first channel state information of a link between the electronic apparatus 600 and the network side apparatus.

As an example, the first channel state information includes at least one of a signal to interference and noise ratio (SINR), a reference signal received power (RSRP), a reference signal received quality (RSRQ), and a reference signal received intensity (RSRI) of an uplink between the electronic apparatus 600 and the network side apparatus.

As an example, the self-state information of the electronic apparatus 600 includes computing and storage capability information of the electronic apparatus 600.

As an example, the computing and storage capability information includes at least one of a CPU occupancy rate and a memory size of the electronic apparatus 600.

As an example, the self-state information of the electronic apparatus 600 includes local data information of the electronic apparatus 600.

As an example, the local data information includes the number of training samples and a sample dimension which are to be used by the electronic apparatus 600 when participating in the federated learning independently.

As an example, the self-state information of the electronic apparatus 600 includes battery level information of the electronic apparatus 600.

As an example, the self-state information of the electronic apparatus 600 includes location information of the electronic apparatus 600.

As an example, the self-state information of the electronic apparatus 600 includes mobility information of the electronic apparatus 600.

As an example, the mobility information includes at least one of a moving speed, a moving direction, and a dwell time of the electronic apparatus 600.

As an example, the self-state information of the electronic apparatus 600 includes second channel state information of a sidelink between the electronic apparatus 600 and the other electronic apparatus within a predetermined range of the electronic apparatus 600.

For description about the network side apparatus determining whether the electronic apparatus 600 is to participate in the federated learning dependently or independently based on the self-state information reported by the electronic apparatus 600, reference may be made to the relevant description in the embodiment of the electronic apparatus 100, which is not repeated here.

As an example, the communication unit 601 may be configured to, when participating in the federated learning dependently, perform the following operations a predetermined number of times on a first split model corresponding to the electronic apparatus 600 in each round of global training of the federated learning to obtain a trained first split model: transmitting first data obtained by training the first split model to a cooperating electronic apparatus that performs cooperative training with the electronic apparatus 600, and updating the first split model based on second data received from the cooperating electronic apparatus, where the second data is obtained by the cooperating electronic apparatus training a second split model corresponding thereto based on the first data. As an example, the electronic apparatus 600 may be the UE described with reference to Figure 3, the first split model may be the UE model described with reference to Figure 3, the cooperating electronic apparatus may be the AE described with reference to Figure 3, the first data may be the intermediate data #1 described with reference to Figure 3, the second data may be the intermediate data #2 described with reference to Figure 3, and the second split model may be the AE model described with reference to Figure 3.

As an example, the communication unit 601 may be configured to report the trained first split model to the network side apparatus, for the network side apparatus to splice the trained first split model with the trained second split model received from the cooperating electronic apparatus to obtain a trained complete model, where the trained second split model is obtained by the cooperating electronic apparatus training the second split model in the global training. Reference is made to Figure 3. After the electronic apparatus 600 and the cooperating electronic apparatus complete the split learning, the trained UE model is uploaded by the electronic apparatus 600 to the network side apparatus, and the trained AE model is uploaded by the cooperating electronic apparatus to the network side apparatus. The trained AE model and the trained UE model are spliced at the network side apparatus to obtain a trained complete model.

As an example, the communication unit 601 may be configured to splice the trained first split model and the trained second split model to obtain a trained complete model, and report the trained complete model to the network side apparatus, where the trained second split model is obtained by the cooperating electronic apparatus training the second split model in the global training. With reference to Figure 3, the AE transmits a trained AE model to the electronic apparatus 600 via the sidelink. After completing splicing of the trained UE model and the trained AE model, the electronic apparatus 600 uploads the trained complete model to the network side apparatus.

An electronic apparatus for wireless communications is further provided according to a further embodiment of the present disclosure. Figure 7 shows a block diagram of functional modules of an electronic apparatus 700 for wireless communications according to a further embodiment of the present disclosure.

As shown in Figure 7, the electronic apparatus 700 includes a reporting unit 701. The reporting unit 701 may be configured to: report self-state information of the electronic apparatus 700 to a network side apparatus servicing the electronic apparatus 700, for the network side apparatus to determine, in a federated learning, whether the electronic apparatus 700 is able to cooperate with other electronic apparatus to train a split model obtained by splitting a to-be-trained model such that the other electronic apparatus is to participate in the federated learning dependently, or the other electronic apparatus is to train the to-be-trained model independently such that the other electronic apparatus is to participate in the federated learning independently.

The reporting unit 701 may be implemented by one or more processing circuits. The processing circuitry may be implemented as a chip, for example.

The electronic apparatus 700 may, for example, be provided on a user equipment side or be communicatively connected to the user equipment. Here, it should be noted that the electronic apparatus 700 may be implemented at a chip level or at an apparatus level. For example, the electronic apparatus 700 may operate as the user equipment itself and may further include a memory, a transceiver (not shown), and other external devices. The memory may store related data information and programs that the user equipment needs to execute to achieve various functions. The transceiver may include one or more communication interfaces to support communications with different devices (such as a base station, another UE, and the like). An implementation of the transceiver is not specifically limited here.

As an example, the network side apparatus may be the electronic apparatus 100 as mentioned above. As an example, the electronic apparatus 700 may be the AE involved in the above embodiments of the electronic apparatus 100, and the other electronic apparatus to cooperate with the electronic apparatus 700 may be the UE involved in the above embodiments of the electronic apparatus 100.

The wireless communication system according to the present disclosure may be a 5G NR communication system. Further, the wireless communication system according to the present disclosure may include a non-terrestrial network. Alternatively, the wireless communication system according to the present disclosure may further include a terrestrial network. In addition, those skilled in the art may understand that the wireless communication system according to the present disclosure may be a 4G or 3G communication system.

For example, the electronic apparatus 700 estimates self-state information $Info_A$ and reports the self-state information to the network side apparatus.

For details of the federated learning, the to-be-trained model and the split learning, reference may be made to the description in conjunction with Figure 2 and Figure 3 in the embodiments of the electronic apparatus 100, which is not repeated here.

The electronic apparatus 700 and the other electronic apparatus (UE) form as the non-standalone member to perform split learning on the to-be-trained model locally, and the trained local model of the non-standalone member and the trained local model of the other member are subject to global model aggregation for federated learning.

In an embodiment according to the present disclosure, the electronic apparatus 700 reports the self-state information of the electronic apparatus 700 to the network side apparatus, for the network side apparatus to determine whether the other electronic apparatus is to participate in the federated learning dependently or independently, enabling more efficient federated learning. For example, the computing or communication resources of the electronic apparatus 700 can be fully utilized. In addition, for the non-standalone member in the federated learning, the electronic apparatus 700 only has part of the model parameter of the to-be-trained model, and the intermediate data is transmitted between the electronic apparatus 700 and other electronic apparatus, so that data privacy and security is ensured, that is, protection of data privacy is further improved.

As an example, the self-state information of the electronic apparatus 700 includes third channel state information of a link between the electronic apparatus 700 and the network side apparatus.

As an example, the third channel state information includes at least one of a signal to interference and noise ratio (SINR), a reference signal received power (RSRP), a reference signal received quality (RSRQ), and a reference signal received intensity (RSRI) of an uplink between the electronic apparatus 700 and the network side apparatus.

As an example, the self-state information of the electronic apparatus 700 includes computing and storage capability information of the electronic apparatus 700.

As an example, the computing and storage capability information includes at least one of a CPU occupancy rate and a memory size of the electronic apparatus 700.

As an example, the self-state information of the electronic apparatus 700 includes local data information of the electronic apparatus 700.

As an example, the local data information includes the number of training samples and a sample dimension which are to be used by the electronic apparatus 700 when participating in the federated learning independently.

As an example, the self-state information of the electronic apparatus 700 includes battery level information of the electronic apparatus 700.

As an example, the self-state information of the electronic apparatus 700 includes location information of the electronic apparatus 700.

As an example, the self-state information of the electronic apparatus 700 includes mobility information of the electronic apparatus 700.

As an example, the mobility information includes at least one of a moving speed, a moving direction, and a dwell time of the electronic apparatus 700.

As an example, the self-state information of the electronic apparatus 700 includes fourth channel state information of a sidelink between the electronic apparatus 700 and the other electronic apparatus within a predetermined range of the electronic apparatus 700.

As an example, the reporting unit 701 may be configured to, when the other electronic apparatus is participating in the federated learning dependently, perform the following operations a predetermined number of times on a second split model corresponding to the electronic apparatus 700 in each round of global training of the federated learning to obtain a trained second split model: receiving, from the other electronic apparatus, first data obtained by training a first split model corresponding to the other electronic apparatus; and training the second split model based on the first data to obtain second data, and transmitting the second data to the other electronic apparatus for the other electronic apparatus to update the first split model. As an example, the other electronic apparatus may be the UE described with reference to Figure 3, the first split model may be the UE model described with reference to Figure 3, the first data may be the intermediate data #1 described with reference to Figure 3, the electronic apparatus 700 may be the AE described with reference to Figure 3, the second split model may be the AE model described with reference to Figure 3, and the second data may be the intermediate data #2 described with reference to Figure 3.

As an example, the reporting unit 701 may be configured to report the trained second split model to the network side apparatus, for the network side apparatus to splice the trained second split model with the trained first split model received from the other electronic apparatus to obtain a trained complete model, where the trained first split model is obtained by the other electronic apparatus training the first split model in the global training. Reference is made to Figure 3. After the electronic apparatus 700 and the other electronic apparatus complete the split learning, the trained AE model is uploaded by the electronic apparatus 700 to the network side apparatus, and the trained UE model is uploaded by other electronic apparatus to the network side apparatus. The trained AE model and the trained UE model are spliced at the network side apparatus to obtain a trained complete model.

As an example, the reporting unit 701 may be configured to splice the trained second split model and the trained first split model to obtain a trained complete model, and report the trained complete model to the network side apparatus, where the trained first split model is obtained by the other electronic apparatus training the first split model in the global training. With reference to Figure 3, the UE transmits a trained UE model to the electronic apparatus 700 via the sidelink. After completing splicing of the trained UE model and the trained AE model, the electronic apparatus 700 uploads the trained complete model to the network side apparatus.

A wireless communication system is further provided according to an embodiment of the present disclosure. The wireless communication system includes an electronic apparatus 100, an electronic apparatus 600, and an electronic apparatus 700. In the wireless communication system, in conjunction with Figure 5, the electronic apparatus 100 may serve as a base station, the electronic apparatus 600 may serve as a UE, and the electronic apparatus 700 may serve as an AE.

In the description of the electronic apparatuses for wireless communications in the above embodiments, some processes or methods are further disclosed. Hereinafter, an overview of the methods is given without repeating some of details discussed above. It should be noted that although disclosed in the description of the electronic apparatuses for wireless communications, the methods do not necessarily adopt the components as described or be performed by those components. For example, an embodiment of the electronic apparatus for wireless communications may be implemented partially or entirely using hardware and/or firmware, while a method for wireless communications discussed below may be implemented entirely by a computer-executable program, although the method may employ the hardware and/or firmware for the electronic apparatus for wireless communications.

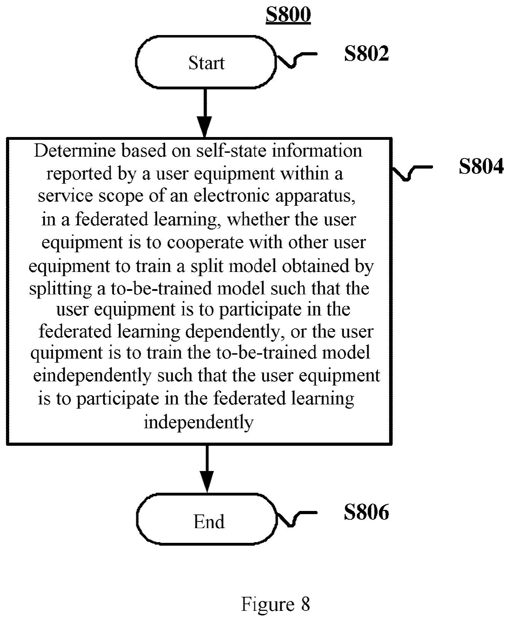

Figure 8 shows a flow chart of a method S800 for wireless communications according to an embodiment of the present disclosure. The method S800 starts from step S802. In step S804, it is determined based on self-state information reported by a user equipment within a service scope of an electronic apparatus, in a federated learning, whether the user equipment is to cooperate with other user equipment to train a split model obtained by splitting a to-be-trained model such that the user equipment is to participate in the federated learning dependently, or the user equipment is to train the to-be-trained model independently such that the user equipment is to participate in the federated learning independently. The method S800 ends at step S806.

This method may be performed, for example, by the electronic apparatus 100 as described above. For specific details, reference may be made to the description of relevant processes of the electronic apparatus 100, which is not repeated here.

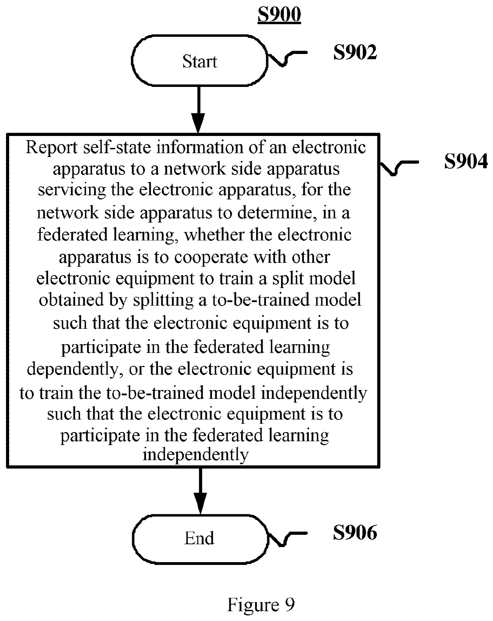

Figure 9 shows a flow chart of a method S900 for wireless communications according to another embodiment of the present disclosure. The method S900 starts from step S902. In step S904, self-state information of an electronic apparatus is reported to a network side apparatus servicing the electronic apparatus, for the network side apparatus to determine, in a federated learning, whether the electronic apparatus is to cooperate with other electronic apparatus to train a split model obtained by splitting a to-be-trained model such that the electronic apparatus is to participate in the federated learning dependently, or the electronic apparatus is to train the to-be-trained model independently such that the electronic apparatus is to participate in the federated learning independently. The method S900 ends at step S906.

This method may be performed, for example, by the electronic apparatus 600 as described above. For specific details, reference may be made to the description of relevant processes of the electronic apparatus 600, which is not repeated here.

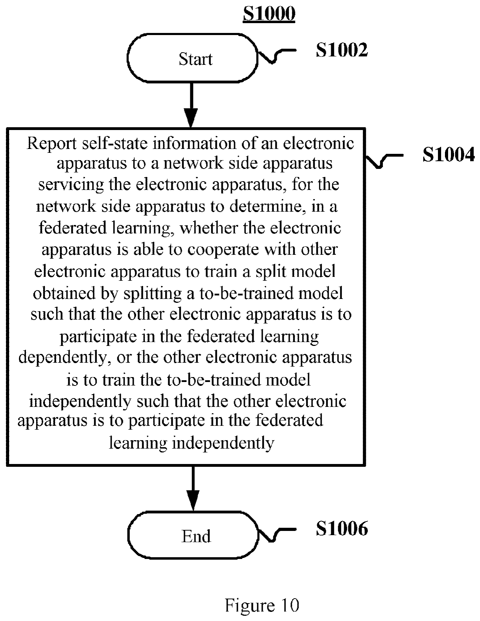

Figure 10 shows a flow chart of a method S1000 for wireless communications according to an embodiment of the present disclosure. The method S1000 starts from step S1002. In step S1004, self-state information of an electronic apparatus is reported to a network side apparatus servicing the electronic apparatus, for the network side apparatus to determine, in a federated learning, whether the electronic apparatus is able to cooperate with other electronic apparatus to train a split model obtained by splitting a to-be-trained model such that the other electronic apparatus is to participate in the federated learning dependently, or the other electronic apparatus is to train the to-be-trained model independently such that the other electronic apparatus is to participate in the federated learning independently. The method S1000 ends at step S1006.

This method may be performed, for example, by the electronic apparatus 700 as described above. For specific details, reference may be made to the description of relevant processes of the electronic apparatus 700, which is not repeated here.

The technology of the present disclosure is applicable to various products.

The electronic apparatus 100 may be implemented as various network side apparatuses, such as a base station. The base station may be implemented as any type of evolved Node B (eNB) or gNB (5G base station). An eNB includes, for example, a macro eNB and a small eNB. The small eNB may be an eNB covering a cell smaller than a macro cell, such as a pico eNB, a micro eNB, or a home (femto) eNB. A similar situation may apply to the gNB. Alternatively, the base station may be implemented as any other type of base station, such as a NodeB or a base transceiver station (BTS). The base station may include a body (which is also referred to as a base station device) configured to control wireless communications and one or more remote radio heads (RRHs) arranged at a different place from the body. In addition, various types of electronic apparatuses may operate as base stations by temporarily or semi-persistently performing base station functions.

The electronic apparatus 600 and the electronic apparatus 700 may be implemented as various user equipment. The user equipment may be implemented as a mobile terminal (such as a smart phone, a tablet personal computer (PC), a notebook PC, a portable game terminal, a portable/dongle-type mobile router, and a digital camera) or a vehicle-mounted terminal (such as an automobile navigation device). The user equipment may be implemented as a terminal that performs machine-to-machine (M2M) communications (which is also referred to as a machine type communication (MTC) terminal). Furthermore, the user equipment may be a wireless communication module (such as an integrated circuit module including a single wafer) installed on each of the above-mentioned terminals.

[Application Examples of Base Station]

(First Application Example)

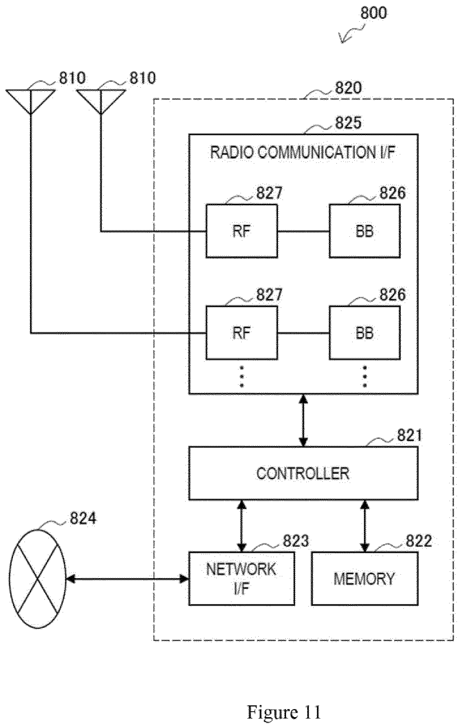

Figure 11 is a block diagram showing a first example of a schematic configuration of an eNB or gNB to which the technology of the present disclosure is applicable. It should be noted that the following description is made taking an eNB as an example. The technology of the present disclosure is also applicable to a gNB. An eNB 800 includes one or more antennas 810 and a base station device 820. The base station device 820 and each of the antennas 810 may be connected to each other via a RF cable.

Each of the antennas 810 includes a single or multiple antenna elements (such as multiple antenna elements included in a multi-input multi-output (MIMO) antenna), and is used for the base station device 820 to transmit and receive wireless signals. As shown in Figure 11, the eNB 800 may include multiple antennas 810. For example, the multiple antennas 810 may be compatible with multiple frequency bands used by the eNB 800. Although Figure 11 shows an example in which the eNB 800 includes multiple antennas 810, the eNB 800 may include a single antenna 810.

The base station device 820 includes a controller 821, a memory 822, a network interface 823, and a radio communication interface 825.

The controller 821 may be, for example, a CPU or DSP, and operates various functions of a higher layer of the base station device 820. For example, the controller 821 generates a data packet based on data in a signal processed by the radio communication interface 825, and transfers the generated packet via the network interface 823. The controller 821 may bundle data from multiple baseband processors to generate a bundled packet, and transfer the generated bundled packet. The controller 821 may have logical functions of performing control such as radio resource control, radio bearer control, mobility management, admission control, and scheduling. The control may be performed in conjunction with a nearby eNB or a core network node. The memory 822 includes an RAM and an ROM, and stores a program executed by the controller 821 and various types of control data (such as a terminal list, transmission power data, and scheduling data).

The network interface 823 is a communication interface for connecting the base station device 820 to a core network 824. The controller 821 may communicate with the core network node or another eNB via the network interface 823. In this case, the eNB 800 and the core network node or another eNB may be connected to each other through a logical interface (such as an S1 interface and an X2 interface). The network interface 823 may be a wired communication interface or a radio communication interface for a wireless backhaul line. In a case that the network interface 823 is a radio communication interface, the network interface 823 may use a higher frequency band for wireless communications than a frequency band used by the radio communication interface 825.

The radio communication interface 825 supports any cellular communication scheme (such as Long-Term Evolution (LTE) and LTE-Advanced), and provides wireless connection to a terminal in a cell of the eNB 800 via the antenna 810. The radio communication interface 825 may typically include, for example, a baseband (BB) processor 826 and an RF circuit 827. The BB processor 826 may perform, for example, coding/decoding, modulation/demodulation and multiplexing/demultiplexing, and perform various types of signal processes of layers (for example, layer 1, media access control (MAC), radio link control (RLC) and packet data convergence protocol (PDCP)). Instead of the controller 821, the BB processor 826 may have a part or all of the above-mentioned logical functions. The BB processor 826 may be a memory storing a communication control program, or a module including a processor and a related circuit configured to execute the program. Updating the program may change the functions of the BB processor 826. The module may be a card or blade inserted into a slot of the base station device 820. Alternatively, the module may be a chip mounted on the card or blade. In addition, the RF circuit 827 may include, for example, a mixer, a filter and an amplifier, and transmit and receive a wireless signal via the antenna 810.

As shown in Figure 11, the radio communication interface 825 may include multiple BB processors 826.

For example, the multiple BB processors 826 may be compatible with multiple frequency bands used by the eNB 800. As shown in Figure 11, the radio communication interface 825 may include multiple RF circuits 827. For example, the multiple RF circuits 827 may be compatible with multiple antenna elements. Although Figure 11 shows an example in which the radio communication interface 825 includes multiple BB processors 826 and multiple RF circuits 827, the radio communication interface 825 may include a single BB processor 826 or a single RF circuit 827.

In the eNB 800 as shown in Figure 11, the electronic apparatus 100, when implemented as a base station, has a transceiver that may be implemented by the radio communication interface 825. At least a part of the functions may be implemented by the controller 821. For example, the controller 821 may enable more efficient federated learning by executing the functions of units in the electronic apparatus 100.

(Second Application Example)

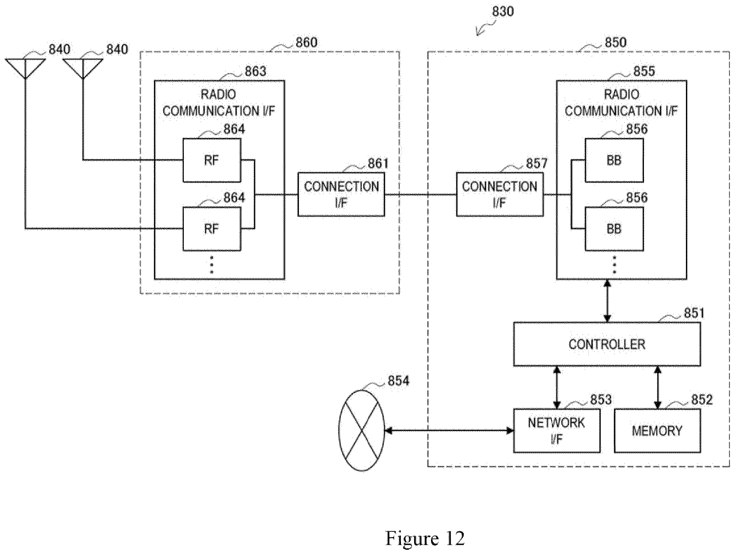

Figure 12 is a block diagram showing a second example of a schematic configuration of an eNB or gNB to which the technology of the present disclosure is applicable. It should be noted that the following description is made taking the eNB as an example. The technology of the present disclosure is also applicable to the gNB. An eNB 830 includes a single or multiple antennas 840, a base station device 850 and an RRH 860. The RRH 860 and each of the antennas 840 may be connected to each other via an RF cable. The base station device 850 and the RRH 860 may be connected to each other via a high-speed line such as an optical fiber cable.

Each of the antennas 840 includes a single or multiple antenna elements (such as multiple antenna elements included in a MIMO antenna), and is used for the RRH 860 to transmit and receive a wireless signal. As shown in Figure 12, the eNB 830 may include multiple antennas 840. For example, the multiple antennas 840 may be compatible with multiple frequency bands used by the eNB 830. Although Figure 12 shows an example in which the eNB 830 includes multiple antennas 840, the eNB 830 may include a single antenna 840.

The base station device 850 includes a controller 851, a memory 852, a network interface 853, a radio communication interface 855, and a connection interface 857. The controller 851, the memory 852, and the network interface 853 are the same as the controller 821, the memory 822, and the network interface 823 described with reference to Figure 11.

The radio communication interface 855 supports any cellular communication scheme (such as LTE and LTE-advanced), and provides wireless communications to a terminal located in a sector corresponding to the RRH 860 via the RRH 860 and the antenna 840. The radio communication interface 855 may typically include, for example, a BB processor 856. The BB processor 856 is the same as the BB processor 826 described with reference to Figure 11, except that the BB processor 856 is connected to an RF circuit 864 of the RRH 860 via the connection interface 857. As shown in Figure 12, the radio communication interface 855 may include multiple BB processors 856. For example, the multiple BB processors 856 may be compatible with multiple frequency bands used by the eNB 830. Although Figure 12 shows an example in which the radio communication interface 855 includes multiple BB processors 856, the radio communication interface 855 may include a single BB processor 856.

The connection interface 857 is an interface for connecting the base station device 850 (the radio communication interface 855) to the RRH 860. The connection interface 857 may be a communication module for communication in the above-described high-speed line that connects the base station device 850 (the radio communication interface 855) to the RRH 860.

The RRH 860 includes a connection interface 861 and a radio communication interface 863.

The connection interface 861 is an interface for connecting the RRH 860 (the radio communication interface 863) to the base station device 850. The connection interface 861 may be a communication module for communication in the above-mentioned high-speed line.

The radio communication interface 863 transmits and receives wireless signals via the antenna 840. The radio communication interface 863 may typically include, for example, the RF circuit 864. The RF circuit 864 may include, for example, a mixer, a filter and an amplifier, and transmit and receive wireless signals via the antenna 840. As shown in Figure 12, the radio communication interface 863 may include multiple RF circuits 864. For example, the multiple RF circuits 864 may support multiple antenna elements. Although Figure 12 shows an example in which the radio communication interface 863 includes multiple RF circuits 864, the radio communication interface 863 may include a single RF circuit 864.

In the eNB 830 as shown in Figure 12, the electronic apparatus 100, when implemented as a base station, has a transceiver that may be implemented by the radio communication interface 855. At least a part of the functions may be implemented by the controller 851. For example, the controller 851 may enable more efficient federated learning by executing the functions of units in the electronic apparatus 100.

[Application Example of User Equipment]

(First Application Example)

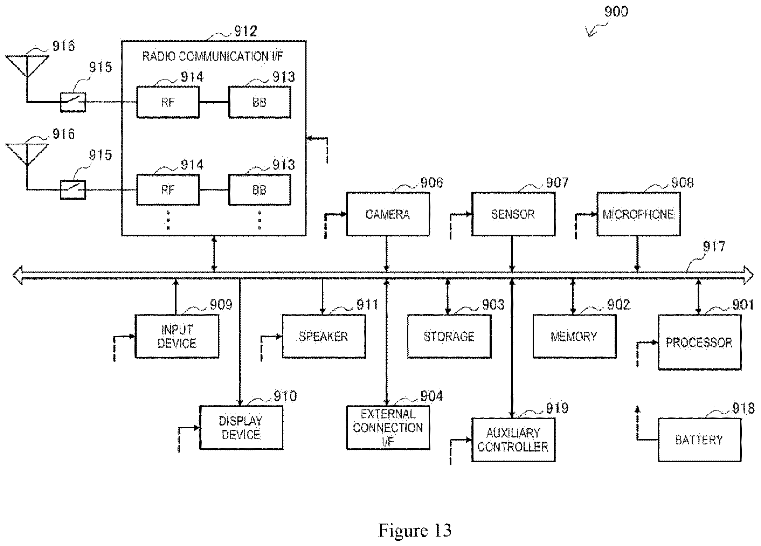

Figure 13 is a block diagram showing an example of a schematic configuration of a smart phone 900 to which the technology of the present disclosure is applicable. The smart phone 900 includes a processor 901, a memory 902, a storage 903, an external connection interface 904, a camera 906, a sensor 907, a microphone 908, an input device 909, a display device 910, a speaker 911, a radio communication interface 912, one or more antenna switches 915, one or more antennas 916, a bus 917, a battery 918, and an auxiliary controller 919.

The processor 901 may be, for example, a CPU or a system on chip (SoC), and controls functions of the application layer and other layers of the smart phone 900. The memory 902 includes an RAM and an ROM, and stores data and programs executed by the processor 901. The storage 903 may include a storage medium, such as a semiconductor memory and a hard disk. The external connection interface 904 is an interface for connecting an external device (such as a memory card and a universal serial bus (USB) device) to the smart phone 900.

The camera 906 includes an image sensor (such as a charge coupled device (CCD) and a complementary metal oxide semiconductor (CMOS)), and generates a captured image. The sensor 907 may include a group of sensors, such as a measurement sensor, a gyroscope sensor, a geomagnetic sensor, and an acceleration sensor. The microphone 908 converts sound inputted to the smart phone 900 into an audio signal. The input device 909 includes, for example, a touch sensor configured to detect a touch on a screen of the display device 910, a keypad, a keyboard, a button, or a switch, and receives an operation or information inputted from a user. The display device 910 includes a screen, such as a liquid crystal display (LCD) or an organic light emitting diode (OLED) display, and displays an output image of the smart phone 900. The speaker 911 converts the audio signal outputted from the smart phone 900 into sound.

The radio communication interface 912 supports any cellular communication scheme (such as LTE and LTE-Advanced), and performs wireless communications. The radio communication interface 912 may generally include, for example, a BB processor 913 and an RF circuit 914. The BB processor 913 may perform, for example, encoding/decoding, modulation/demodulation, and multiplexing/demultiplexing, and perform various types of signal processing for wireless communications. In addition, the RF circuit 914 may include, for example, a mixer, a filter and an amplifier, and transmit and receive a wireless signal via the antenna 916. It should be noted that, although the figure shows a situation where one RF link is connected to one antenna, this is only illustrative, and a situation where one RF link is connected to multiple antennas through multiple phase shifters is also possible. The radio communication interface 912 may be a chip module on which the BB processor 913 and the RF circuit 914 are integrated. As shown in Figure 13, the radio communication interface 912 may include multiple BB processors 913 and multiple RF circuits 914. Although Figure 13 shows an example in which the radio communication interface 912 includes multiple BB processors 913 and multiple RF circuits 914, the radio communication interface 912 may include a single BB processor 913 or a single RF circuit 914.

In addition to the cellular communication scheme, the radio communication interface 912 may support another type of wireless communication scheme, such as a short-range wireless communication scheme, a near field communication scheme, and a wireless local area network (LAN) scheme. In this case, the radio communication interface 912 may include a BB processor 913 and an RF circuit 914 for each wireless communication scheme.

Each of the antenna switches 915 switches a connection destination of the antenna 916 among multiple circuits (for example, circuits for different wireless communication schemes) included in the radio communication interface 912.

Each of the antennas 916 includes a single or multiple antenna elements (such as multiple antenna elements included in a MIMO antenna), and is configured for the radio communication interface 912 to transmit and receive wireless signals. As shown in Figure 13, the smart phone 900 may include multiple antennas 916. Although Figure 13 shows an example in which the smart phone 900 includes multiple antennas 916, the smart phone 900 may include a single antenna 916.

In addition, the smart phone 900 may include antenna(s) 916 for each wireless communication scheme. In this case, the antenna switches 915 may be omitted from the configuration of the smart phone 900.

The processor 901, the memory 902, the storage 903, the external connection interface 904, the camera 906, the sensor 907, the microphone 908, the input device 909, the display device 910, the speaker 911, the radio communication interface 912, and the auxiliary controller 919 are connected to each other via the bus 917. The battery 918 supplies power to each block of the smart phone 900 as shown in Figure 13 via a feeder line. The feeder line is partially shown as a dashed line in the figure. The auxiliary controller 919 operates the least necessary function of the smart phone 900 in a sleep mode, for example.

In the smart phone 900 as shown in Figure 13, in a case where the electronic apparatuses 600 and the electronic apparatus 700 are implemented, for example, as a smart phone on the user equipment side, the transceiver of the electronic apparatus 600 and the electronic apparatus 700 may be implemented by the radio communication interface 912. At least part of the functions may be implemented by the processor 901 or the auxiliary controller 919. For example, the processor 901 or the auxiliary controller 919 may enable more efficient federated learning by executing the functions of units in the electronic apparatus 600 and the electronic apparatus 700.

(Second Application Example)

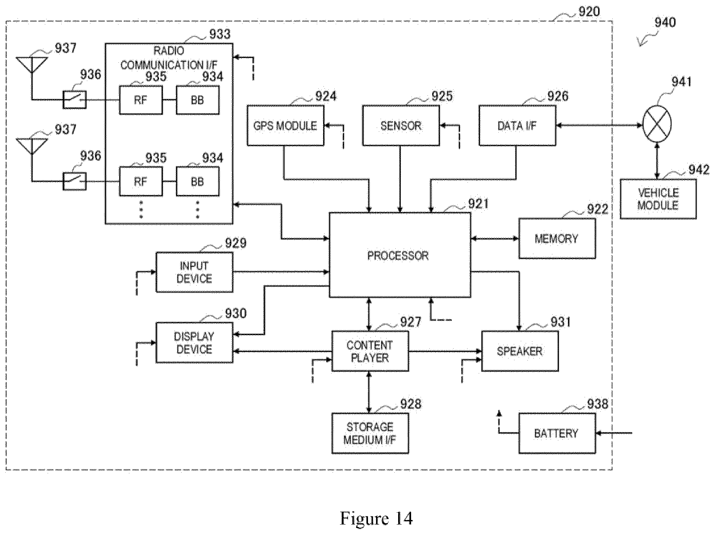

Figure 14 is a block diagram showing an example of a schematic configuration of an automobile navigation device 920 to which the technology of the present disclosure is applicable. The automobile navigation device 920 includes a processor 921, a memory 922, a global positioning system (GPS) module 924, a sensor 925, a data interface 926, a content player 927, a storage medium interface 928, an input device 929, a display device 930, a speaker 931, a radio communication interface 933, one or more antenna switches 936, one or more antennas 937, and a battery 938.

The processor 921 may be, for example, a CPU or SoC, and controls the navigation function and other functions of the automobile navigation device 920. The memory 922 includes an RAM and an ROM, and stores data and programs executed by the processor 921.

The GPS module 924 measures a position (such as latitude, longitude, and altitude) of the automobile navigation device 920 based on a GPS signal received from a GPS satellite. The sensor 925 may include a group of sensors, such as a gyroscope sensor, a geomagnetic sensor, and an air pressure sensor. The data interface 926 is connected to, for example, an in-vehicle network 941 via a terminal not shown, and acquires data (such as vehicle speed data) generated by a vehicle.

The content player 927 reproduces content stored in a storage medium (such as a CD and a DVD) inserted into the storage medium interface 928. The input device 929 includes, for example, a touch sensor configured to detect a touch on a screen of the display device 930, a button, or a switch, and receives an operation or information inputted from a user. The display device 930 includes a screen such as an LCD or OLED display, and displays an image of a navigation function or reproduced content. The speaker 931 outputs a sound of the navigation function or reproduced content.

The radio communication interface 933 supports any cellular communication scheme (such as LTE and LTE-Advanced), and performs wireless communications. The radio communication interface 933 may generally include, for example, a BB processor 934 and an RF circuit 935. The BB processor 934 may perform, for example, encoding/decoding, modulation/-demodulation, and multiplexing/demultiplexing, and perform various types of signal processing for wireless communications. In addition, the RF circuit 935 may include, for example, a mixer, a filter and an amplifier, and transmit and receive a wireless signal via the antenna 937. The radio communication interface 933 may be a chip module on which the BB processor 934 and the RF circuit 935 are integrated. As shown in Figure 14, the radio communication interface 933 may include multiple BB processors 934 and multiple RF circuits 935. Although Figure 14 shows an example in which the radio communication interface 933 includes multiple BB processors 934 and multiple RF circuits 935, the radio communication interface 933 may include a single BB processor 934 or a single RF circuit 935.

In addition to the cellular communication scheme, the radio communication interface 933 may support another type of wireless communication scheme, such as a short-range wireless communication scheme, a near field communication scheme, or a wireless LAN scheme. In this case, the radio communication interface 933 may include a BB processor 934 and an RF circuit 935 for each wireless communication scheme.

Each of the antenna switches 936 switches a connection destination of the antenna 937 among multiple circuits (such as circuits for different wireless communication schemes) included in the radio communication interface 933.

Each of the antennas 937 includes a single or multiple antenna elements (such as multiple antenna elements included in a MIMO antenna), and is configured for the radio communication interface 933 to transmit and receive wireless signals. As shown in Figure 14, the automobile navigation device 920 may include multiple antennas 937. Although Figure 14 shows an example in which the automobile navigation device 920 includes multiple antennas 937, the automobile navigation device 920 may include a single antenna 937.

In addition, the automobile navigation device 920 may include antenna(s) 937 for each wireless communication scheme. In this case, the antenna switches 936 may be omitted from the configuration of the automobile navigation device 920.

The battery 938 supplies power to blocks of the automobile navigation device 920 shown in Figure 14 via a feeder line. The feeder line is partially shown as a dashed line in the figure. The battery 938 accumulates electric power supplied from the vehicle.

In the automobile navigation device 920 as shown in Figure 14, in a case where the electronic apparatus 600 and the electronic apparatus 700 are implemented, for example, as an automobile navigation device on the user equipment side, the transceiver of the electronic apparatus 600 and the electronic apparatus 700 may be implemented by the radio communication interface 933. At least part of the functions may be implemented by the processor 921. For example, the processor 921 may enable more efficient federated learning by executing the functions of units in the electronic apparatus 600 and the electronic apparatus 700.

The technology of the present disclosure may be implemented as an in-vehicle system (or vehicle) 940 including the vehicle navigation device 920, an in-vehicle network 941, and one or more blocks of vehicle modules 942. The vehicle modules 942 generate vehicle data (such as vehicle speed, engine speed, and failure information), and outputs the generated data to the in-vehicle network 941.

Basic principles of the present disclosure are described above in conjunction with the specific embodiments. However, it should be noted that those skilled in the art can understand that all or any of steps or components of the methods and apparatuses of the present disclosure may be implemented in any computing device (including processors, storage media, and the like) or a network of computing devices in a form of hardware, firmware, software or a combination thereof. Such implementation can be realized by those skilled in the art after reading the description of the present disclosure, by utilizing basic knowledge of circuit design or basic programming skills.

Moreover, a program product storing machine-readable instruction codes is further provided according to an embodiment of the present disclosure. The instruction codes, when read and executed by a machine, may implement the method according to any of the embodiments of the present disclosure.

Accordingly, a storage medium for carrying the program product storing the machine-readable instruction codes is further included in the present disclosure. The storage medium includes, but is not limited to, a floppy disk, an optical disk, a magneto-optical disk, a storage card, a memory stick, and the like.

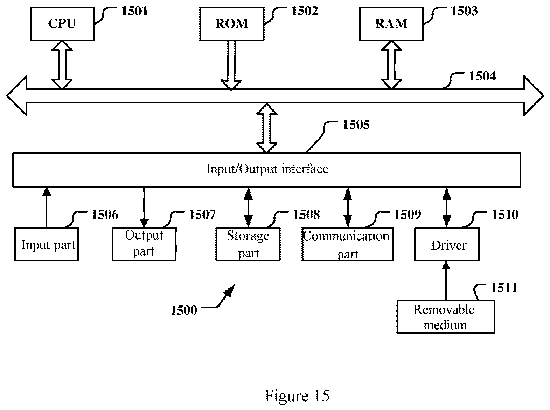

In a case of implementing the embodiments of the present disclosure in software or firmware, the program consisting of the software is mounted to a computer with a dedicated hardware structure (such as a general-purpose computer 1500 as shown in Figure 15) from the storage medium or network. The computer, when mounted with various programs, performs various functions.

In Figure 15, a central processing unit (CPU) 1501 executes various processes according to a program stored in a read-only memory (ROM) 1502 or a program loaded from a storage part 1508 to a random-access memory (RAM) 1503. In the RAM 1503, data required for the CPU 1501 to perform various processes or the like is stored as necessary. The CPU 1501, the ROM 1502 and the RAM 1503 are connected to each other via a bus 1504. An input/output interface 1505 is connected to the bus 1504.

The following components are connected to the input/output interface 1505: an input part 1506 (including a keyboard, a mouse, and the like), an output part 1507 (including a display, such as a cathode ray tube (CRT) and a liquid crystal display (LCD), a loudspeaker, and the like), a storage part 1508 (including a hard disk and the like), and a communication part 1509 (including a network interface card, such as a LAN card, and a modem). The communication part 1509 performs communication processing via a network, such as the Internet. A driver 1510 may be connected to the input/output interface 1505 as needed. A removable medium 1511, such as a magnetic disk, an optical disk, a magnetic optical disk, and a semiconductor memory, is mounted to the driver 1510 as required, so that a computer program read therefrom is mounted to the storage part 1508 as required.

In a case that the above processes are implemented by software, the program consisting the software is mounted from a network, such as the Internet, or from a storage medium, such as the removable medium 1511.

Those skilled in the art should understood that, the storage medium is not limited to the removable medium 1511, as shown in Figure 15, which stores a program and is distributed separately from the device so as to provide the program for a user. Examples of the removable medium 1511 includes a magnetic disk (including a floppy disk (registered trademark)), an optical disk (including a compact disk read-only memory (CD-ROM) and a Digital Versatile Disk (DVD)), a magneto-optical disk (including a mini disk (MD) (registered trademark)), and a semiconductor memory. Alternatively, the storage medium may be the ROM 1502, the hard disk contained in the storage part 1508, or the like. The storage medium stores a program and is distributed to the user along with an apparatus in which the storage medium is incorporated.

It should be further noted that components or steps in the apparatus, method and system of the present disclosure can be decomposed and/or recombined. Such decomposition and/or recombination should be considered equivalents of the present disclosure. Furthermore, steps for executing the above processes may naturally be executed in a chronological order as described, but do not necessarily need to be executed in the chronological order. Certain steps may be performed in parallel with or independently of each other.

Finally, it should be noted that terms "include", "comprise" or any other variants are intended to be non-exclusive. Therefore, a process, method, article or device including a series of elements includes not only the elements but also other elements that are not enumerated, or further includes elements inherent to the process, method, article or device. In addition, unless expressively limited otherwise, the statement "comprising (including) a(n)..." does not exclude existence of other similar elements in the process, method, article or device.

Although the embodiments of the present disclosure are described in detail above with reference to the accompanying drawings, it should be understood that the embodiments are only for illustrating the present disclosure and do not constitute a limitation to the present disclosure. For those skilled in the art, various modifications and changes can be made to the embodiments without departing from the spirit and scope of the present disclosure. Therefore, the scope of the present disclosure is limited by only the appended claims and equivalents thereof.

The present technology may be implemented as the following solutions.

Solution 1. An electronic apparatus for wireless communications, comprising:
processing circuitry configured to:
determine based on self-state information reported by a user equipment within a service scope of the electronic apparatus, in a federated learning, whether the user equipment is to cooperate with other user equipment to train a split model obtained by splitting a to-be-trained model such that the user equipment is to participate in the federated learning dependently, or the user equipment is to train the to-be-trained model independently such that the user equipment is to participate in the federated learning independently.

Solution 2. The electronic apparatus according to solution 1, wherein

the self-state information comprises first channel state information of a link between the user equipment and the electronic apparatus, and

the processing circuitry is configured to determine that the user equipment is to participate in the federated learning dependently, in a case that a value of the first channel state information is less than a first predetermined threshold.

Solution 3. The electronic apparatus according to solution 2, wherein the first channel state information comprises at least one of a signal to interference and noise ratio SINR, a reference signal received power RSRP, a reference signal received quality RSRQ, and a reference signal received intensity RSRI of an uplink between the user equipment and the electronic apparatus.

Solution 4. The electronic apparatus according to solution 1, wherein

the self-state information comprises computing and storage capability information of the user equipment, and

the processing circuitry is configured to determine that the user equipment is to participate in the federated learning dependently, in a case where a storage space size indicated by the computing and storage capability information is less than a size of the to-be-trained model, and/or a computing capability indicated by the computing and storage capability information is less than a computing capability required for training the to-be-trained model.

Solution 5. The electronic apparatus according to solution 4, wherein the computing and storage capability information comprises at least one of a CPU occupancy rate and a memory size of the user equipment.

Solution 6. The electronic apparatus according to solution 1, wherein

the self-state information comprises local data information of the user equipment, and

the processing circuitry is configured to determine that the user equipment is to participate in the federated learning dependently in a case where a training time required for the user equipment to train the to-be-trained model is greater than a second predetermined threshold, wherein the training time is obtained based on the local data information and the computing and storage capability information of the user equipment.

Solution 7. The electronic apparatus according to solution 6, wherein the local data information comprises the number of training samples and a sample dimension which are to be used by the user equipment when participating in the federated learning independently.

Solution 8. The electronic apparatus according to solution 1, wherein

the self-state information comprises battery level information of the user equipment, and
the processing circuitry is configured to determine that the user equipment is to participate in the federated learning dependently, in a case that a battery level indicated by the battery level information is less than a third predetermined threshold.

Solution 9. The electronic apparatus according to solution 1, wherein

the self-state information comprises location information of the user equipment, and
the processing circuitry is configured to determine that the user equipment is to participate in the federated learning independently, on determining based on the location information that there is no other user equipment within a predetermined range of the user equipment.

Solution 10. The electronic apparatus according to solution 1, wherein

the self-state information comprises mobility information of the user equipment, and
the processing circuitry is configured to determine that the user equipment is to participate in the federated learning independently, on determining based on the mobility information that the user equipment has high mobility.

Solution 11. The electronic apparatus according to solution 10, wherein the mobility information comprises at least one of a moving speed, a moving direction, and a dwell time of the user equipment.

Solution 12. The electronic apparatus according to any one of solutions 1 to 11, wherein the processing circuitry is configured to select a to-be-cooperated user equipment for cooperative training with the user equipment based on second channel state information of a sidelink between the user equipment and other user equipment within a predetermined range of the user equipment, on determining that the user equipment is to participate in the federated learning dependently.

Solution 13. The electronic apparatus according to solution 12, wherein the processing circuitry is configured to select, as the to-be-cooperated user equipment, other user equipment satisfying that a value of second channel state information of a sidelink corresponding to the other user equipment is greater than a fourth predetermined threshold.

Solution 14. The electronic apparatus according to solution 13, wherein the second channel state information comprises at least one of a signal to interference and noise ratio SINR, a reference signal received power RSRP, a reference signal received quality RSRQ, and a reference signal received intensity RSRI of the sidelink.

Solution 15. The electronic apparatus according to solution 12, wherein the processing circuitry is configured to select, based on the second channel state information, other user equipment satisfying the following condition as the to-be-cooperated user equipment: via a sidelink corresponding to the other user equipment, the user equipment is allowed to transmit model data related to a split model corresponding to the user equipment to the other user equipment within a first predetermined time range, and/or the other user equipment is allowed to transmit model data related to a split model corresponding to the other user equipment to the user equipment within a second predetermined time range.

Solution 16. The electronic apparatus according to any one of solutions 12 to 15, wherein the processing circuitry is configured to determine, based on the second channel state information, a split point for splitting the to-be-trained model and obtaining the split model, in a case where the to-be-cooperated user equipment is selected.

Solution 17. The electronic apparatus according to solution 16, wherein the processing circuitry is configured to enable the determined split point to satisfy the following condition:

via a sidelink between the user equipment and the to-be-cooperated user equipment, the user equipment is allowed to transmit model data related to a split model corresponding to the user equipment to the to-be-cooperated user equipment within a first predetermined time range, and/or the to-be-cooperated user equipment is allowed to transmit model data related to a split model corresponding to the to-be-cooperated user equipment to the user equipment within a second predetermined time range.

Solution 18. The electronic apparatus according to solution 1, wherein
the self-state information comprises second channel state information of a sidelink between the user equipment and the other user equipment within a predetermined range of the user equipment.

Solution 19. The electronic apparatus according to solution 18, wherein
the processing circuitry is configured to determine that the user equipment is to participate in the federated learning dependently, in a case that there is other user equipment within the predetermined range whose value of second channel state information is greater than a fifth predetermined threshold.

Solution 20. The electronic apparatus according to solution 19, wherein
the processing circuitry is configured to determine that the user equipment is to participate in the federated learning independently, in a case that second channel state information corresponding to other user equipment within the predetermined range is all less than or equal to the fifth predetermined threshold.

Solution 21. The electronic apparatus according to solution 19 or 20, wherein the second channel state information comprises at least one of a signal to interference and noise ratio SINR, a reference signal received power RSRP, a reference signal received quality RSRQ, and a reference signal received intensity RSRI of the sidelink.

Solution 22. The electronic apparatus according to solution 18, wherein
the processing circuitry is configured to determine that the user equipment is to participate in the federated learning dependently, on determining based on the second channel state information that there is other user equipment satisfying the following condition: via a sidelink corresponding to the other user equipment, the user equipment is allowed to transmit model data related to a split model corresponding to the user equipment to the other user equipment within a first predetermined time range, and the other user equipment is allowed to transmit model data related to a split model corresponding to the other user equipment to the user equipment within a second predetermined time range.

Solution 23. The electronic apparatus according to solution 18, wherein
the processing circuitry is configured to determine that the user equipment is to participate in the federated learning independently, on determining based on the second channel state information that there is no other user equipment satisfying the following condition: via a sidelink corresponding to the other user equipment, the user equipment is allowed to transmit model data related to a split model corresponding to the user equipment to the other user equipment within a first predetermined time range, and the other user equipment is allowed to transmit model data related to a split model corresponding to the other user equipment to the user equipment within a second predetermined time range.

Solution 24. The electronic apparatus according to any one of solutions 1 to 23, wherein
the processing circuitry is configured to transmit information about the federated learning to the user equipment and a to-be-cooperated user equipment for cooperative training with the user equipment, on determining that the user equipment is to participate in the federated learning dependently and the to-be-cooperated user equipment is selected.

Solution 25. The electronic apparatus according to solution 24, wherein
the processing circuitry is configured to broadcast, to the user equipment and the to-be-cooperated user equipment, the to-be-trained model and a split point for splitting the to-be-trained model and obtaining the split model.

Solution 26. The electronic apparatus according to solution 24, wherein the processing circuitry is configured to: transmit, to the user equipment, a split model corresponding to the user equipment; and transmit, to the to-be-cooperated user equipment, a split model corresponding to the to-be-cooperated user equipment.

Solution 27. the electronic apparatus according to any one of solutions 24 to 26, wherein the processing circuitry is configured to notify the user equipment and the to-be-cooperated user equipment to report trained split models respectively, and the trained split models are spliced by the electronic apparatus to obtain a trained complete model.

Solution 28. The electronic apparatus according to any one of solutions 24 to 26, wherein the processing circuitry is configured to notify the user equipment or the to-be-cooperated user equipment to: splice trained split models to obtain a trained complete model, and report the trained complete model to the electronic apparatus.

Solution 29. The electronic apparatus according to any one of solutions 24 to 28, wherein the processing circuitry is configured to notify the user equipment and the to-be-cooperated user equipment of information about a sidelink between the user equipment and the to-be-cooperated user equipment.

Solution 30. An electronic apparatus for wireless communications, comprising:
processing circuitry configured to:
report self-state information of the electronic apparatus to a network side apparatus servicing the electronic apparatus, for the network side apparatus to determine, in a federated learning, whether the electronic apparatus is to cooperate with other electronic apparatus to train a split model obtained by splitting a to-be-trained model such that the electronic apparatus is to participate in the federated learning dependently, or the electronic apparatus is to train the to-be-trained model independently such that the electronic apparatus is to participate in the federated learning independently.

Solution 31. The electronic apparatus according to solution 30, wherein
the self-state information comprises first channel state information of a link between the electronic apparatus and the network side apparatus.

Solution 32. The electronic apparatus according to solution 31, wherein
the first channel state information comprises at least one of a signal to interference and noise ratio SINR, a reference signal received power RSRP, a reference signal received quality RSRQ, and a reference signal received intensity RSRI of an uplink between the electronic apparatus and the network side apparatus.

Solution 33. The electronic apparatus according to solution 30, wherein
the self-state information comprises computing and storage capability information of the electronic apparatus.

Solution 34. The electronic apparatus according to solution 33, wherein
the computing and storage capability information comprises at least one of a CPU occupancy rate and a memory size of the electronic apparatus.

Solution 35. The electronic apparatus according to solution 30, wherein

the self-state information comprises local data information of the electronic apparatus.

Solution 36. The electronic apparatus according to solution 35, wherein
the local data information comprises the number of training samples and a sample dimension which are to be used by the electronic apparatus when participating in the federated learning independently.

Solution 37. The electronic apparatus according to solution 30, wherein
the self-state information comprises battery level information of the electronic apparatus.

Solution 38. The electronic apparatus according to solution 30, wherein
the self-state information comprises location information of the electronic apparatus.

Solution 39. The electronic apparatus according to solution 30, wherein
the self-state information comprises mobility information of the electronic apparatus.

Solution 40. The electronic apparatus according to solution 39, wherein
the mobility information comprises at least one of a moving speed, a moving direction, and a dwell time of the electronic apparatus.

Solution 41. The electronic apparatus according to solution 30, wherein
the self-state information comprises second channel state information of a sidelink between the electronic apparatus and the other electronic apparatus within a predetermined range of the electronic apparatus.

Solution 42. The electronic apparatus according to any one of solutions 30 to 41, wherein
the processing circuitry is configured to, when participating in the federated learning dependently, perform the following operations a predetermined number of times on a first split model corresponding to the electronic apparatus in each round of global training of the federated learning to obtain a trained first split model:

transmitting first data obtained by training the first split model to a cooperating electronic apparatus that performs cooperative training with the electronic apparatus, and
updating the first split model based on second data received from the cooperating electronic apparatus, wherein the second data is obtained by the cooperating electronic apparatus training a second split model corresponding thereto based on the first data.

Solution 43. The electronic apparatus according to solution 42, wherein

the processing circuitry is configured to report the trained first split model to the network side apparatus, for the network side apparatus to splice the trained first split model with the trained second split model received from the cooperating electronic apparatus to obtain a trained complete model,

wherein the trained second split model is obtained by the cooperating electronic apparatus training the second split model in the global training.

Solution 44. The electronic apparatus according to solution 42, wherein the processing circuitry is configured to splice the trained first split model and the trained second split model to obtain a trained complete model, and report the trained complete model to the network side apparatus,

wherein the trained second split model is obtained by the cooperating electronic apparatus training the second split model in the global training.

Solution 45. An electronic apparatus for wireless communications, comprising:

processing circuitry configured to:

report self-state information of the electronic apparatus to a network side apparatus servicing the electronic apparatus, for the network side apparatus to determine, in a federated learning, whether the electronic apparatus is able to cooperate with other electronic apparatus to train a split model obtained by splitting a to-be-trained model such that the other electronic apparatus is to participate in the federated learning dependently, or the other electronic apparatus is to train the to-be-trained model independently such that the other electronic apparatus is to participate in the federated learning independently.

Solution 46. The electronic apparatus according to solution 45, wherein

the self-state information comprises third channel state information of a link between the electronic apparatus and the network side apparatus.

Solution 47. The electronic apparatus according to solution 46, wherein

the third channel state information comprises at least one of a signal to interference and noise ratio SINR, a reference signal received power RSRP, a reference signal received quality RSRQ, and a reference signal received intensity RSRI of an uplink between the electronic apparatus and the network side apparatus.

Solution 48. The electronic apparatus according to solution 45, wherein

the self-state information comprises computing and storage capability information of the electronic apparatus.

Solution 49. The electronic apparatus according to solution 48, wherein

the computing and storage capability information comprises at least one of a CPU occupancy rate and a memory size of the electronic apparatus.

Solution 50. The electronic apparatus according to solution 49, wherein

the self-state information comprises local data information of the electronic apparatus.

Solution 51. The electronic apparatus according to solution 50, wherein

the local data information comprises the number of training samples and a sample dimension which are to be used by the electronic apparatus when participating in the federated learning independently.

Solution 52. The electronic apparatus according to solution 45, wherein

the self-state information comprises battery level information of the electronic apparatus.

Solution 53. The electronic apparatus according to solution 45, wherein

the self-state information comprises location information of the electronic apparatus.

Solution 54. The electronic apparatus according to solution 45, wherein

the self-state information comprises mobility information of the electronic apparatus.

Solution 55. The electronic apparatus according to solution 54, wherein

the mobility information comprises at least one of a moving speed, a moving direction, and a dwell time of the electronic apparatus.

Solution 56. The electronic apparatus according to solution 45, wherein

the self-state information comprises fourth channel state information of a sidelink between the electronic apparatus and the other electronic apparatus within a predetermined range of the electronic apparatus.

Solution 57. The electronic apparatus according to any one of solutions 45 to 56, wherein

the processing circuitry is configured to, when the other electronic apparatus is participating in the federated learning dependently, perform the following operations a predetermined number of times on a second split model corresponding to the electronic apparatus in each round of global training of the federated learning to obtain a trained second split model:

receiving, from the other electronic apparatus, first data obtained by training a first split model corresponding to the other electronic apparatus, and

training the second split model based on the first data to obtain second data, and transmitting the second data to the other electronic apparatus for the other electronic apparatus to update the first split model.

Solution 58. The electronic apparatus according to solution 57, wherein

the processing circuitry is configured to report the trained second split model to the network side apparatus, for the network side apparatus to splice the trained second split model with the trained first split model received from the other electronic apparatus to obtain a trained complete model,

wherein the trained first split model is obtained by the other electronic apparatus training the first split model in the global training.

Solution 59. The electronic apparatus according to solution 57, wherein the processing circuitry is configured to splice the trained second split model and the trained first split model to obtain a trained complete model, and report the trained complete model to the network side apparatus, wherein the trained first split model is obtained by the other electronic apparatus training the first split model in the global training.

Solution 60. A wireless communication system, comprising:

the electronic apparatus according to any one of solutions 1 to 29,

the electronic apparatus according to any one of solutions 30 to 44, and

the electronic apparatus according to any one of solutions 45 to 59.

Solution 61. A method for wireless communications, comprising:
determining based on self-state information reported by a user equipment within a service scope of an electronic apparatus, in a federated learning, whether the user equipment is to cooperate with other user equipment to train a split model obtained by splitting a to-be-trained model such that the user equipment is to participate in the federated learning dependently, or the user equipment is to train the to-be-trained model independently such that the user equipment is to participate in the federated learning independently.

Solution 62. A method for wireless communications, comprising:
reporting self-state information of an electronic apparatus to a network side apparatus servicing the electronic apparatus, for the network side apparatus to determine, in a federated learning, whether the electronic apparatus is to cooperate with other electronic apparatus to train a split model obtained by splitting a to-be-trained model such that the electronic apparatus is to participate in the federated learning dependently, or the electronic apparatus is to train the to-be-trained model independently such that the electronic apparatus is to participate in the federated learning independently.

Solution 63. A method for wireless communications, comprising:
reporting self-state information of an electronic apparatus to a network side apparatus servicing the electronic apparatus, for the network side apparatus to determine, in a federated learning, whether the electronic apparatus is able to cooperate with other electronic apparatus to train a split model obtained by splitting a to-be-trained model such that the other electronic apparatus is to participate in the federated learning dependently, or the other electronic apparatus is to train the to-be-trained model independently such that the other electronic apparatus is to participate in the federated learning independently.

Solution 64. A computer-readable storage medium storing computer-executable instructions, wherein the computer-executable instructions, when executed, implements the method for wireless communications according to any one of solutions 61 to 63.

**Claims**

1. An electronic apparatus for wireless communications, comprising
processing circuitry configured to:
determine based on self-state information reported by a user equipment within a service scope of the electronic apparatus, in a federated learning, whether the user equipment is to cooperate with other user equipment to train a split model obtained by splitting a to-be-trained model such that the user equipment is to participate in the federated learning dependently, or the user equipment is to train the to-be-trained model independently such that the user equipment is to participate in the federated learning independently.

2. The electronic apparatus according to claim 1, wherein

the self-state information comprises first channel state information of a link between the user equipment and the electronic apparatus, and the processing circuitry is configured to determine that the user equipment is to participate in the federated learning dependently, in a case that a value of the first channel state information is less than a first predetermined threshold.

3. The electronic apparatus according to claim 2, wherein the first channel state information comprises at least one of a signal to interference and noise ratio SINR, a reference signal received power RSRP, a reference signal received quality RSRQ, and a reference signal received intensity RSRI of an uplink between the user equipment and the electronic apparatus.

4. The electronic apparatus according to claim 1, wherein

the self-state information comprises computing and storage capability information of the user equipment, and the processing circuitry is configured to determine that the user equipment is to participate in the federated learning dependently, in a case where a storage space size indicated by the computing and storage capability information is less than a size of the to-be-trained model, and/or a computing capability indicated by the computing and storage capability information is less than a computing capability required for training the to-be-trained model.

5. The electronic apparatus according to claim 4, wherein the computing and storage capability information comprises at least one of a CPU occupancy rate and a memory size of the user equipment.

6. The electronic apparatus according to claim 1, wherein

the self-state information comprises local data information of the user equipment, and the processing circuitry is configured to determine that the user equipment is to participate in the federated learning dependently in a case where a training time required for the user equipment to train the to-be-trained model is greater than a second predetermined threshold, wherein the training time is obtained based on the local data information and the computing and storage capability information of the user equipment.

7. The electronic apparatus according to claim 6, wherein the local data information comprises the number of training samples and a sample dimension which are to be used by the user equipment when participating in the federated learning independently.

8. The electronic apparatus according to claim 1, wherein

the self-state information comprises battery level information of the user equipment, and the processing circuitry is configured to determine that the user equipment is to participate in the federated learning dependently, in a case that a battery level indicated by the battery level information is less than a third predetermined threshold.

9. The electronic apparatus according to claim 1, wherein

the self-state information comprises location information of the user equipment, and the processing circuitry is configured to determine that the user equipment is to participate in the federated learning independently, on determining based on the location information that there is no other user equipment within a predetermined range of the user equipment.

10. The electronic apparatus according to claim 1, wherein

the self-state information comprises mobility information of the user equipment, and the processing circuitry is configured to determine that the user equipment is to participate in the federated learning independently, on determining based on the mobility information that the user equipment has high mobility.

11. The electronic apparatus according to claim 10, wherein the mobility information comprises at least one of a moving speed, a moving direction, and a dwell time of the user equipment.

12. The electronic apparatus according to any one of claims 1 to 11, wherein the processing circuitry is configured to select a to-be-cooperated user equipment for cooperative training with the user equipment based on second channel state information of a sidelink between the user equipment and other user equipment within a predetermined range of the user equipment, on determining that the user equipment is to participate in the federated learning dependently.

13. The electronic apparatus according to claim 12, wherein
the processing circuitry is configured to select, as the to-be-cooperated user equipment, other user equipment satisfying that a value of second channel state information of a sidelink corresponding to the other user equipment is greater than a fourth predetermined threshold.

14. The electronic apparatus according to claim 13, wherein
the second channel state information comprises at least one of a signal to interference and noise ratio SINR, a reference signal received power RSRP, a reference signal received quality RSRQ, and a reference signal received intensity RSRI of the sidelink.

15. The electronic apparatus according to claim 12, wherein
the processing circuitry is configured to select, based on the second channel state information, other user equipment satisfying the following condition as the to-be-cooperated user equipment: via a sidelink corresponding to the other user equipment, the user equipment is allowed to transmit model data related to a split model corresponding to the user equipment to the other user equipment within a first predetermined time range, and/or the other user equipment is allowed to transmit model data related to a split model corresponding to the other user equipment to the user equipment within a second predetermined time range.

16. The electronic apparatus according to any one of claims 12 to 15, wherein
the processing circuitry is configured to determine, based on the second channel state information, a split point for splitting the to-be-trained model and obtaining the split model, in a case where the to-be-cooperated user equipment is selected.

17. The electronic apparatus according to claim 16, wherein
the processing circuitry is configured to enable the determined split point to satisfy the following condition:
via a sidelink between the user equipment and the to-be-cooperated user equipment, the user equipment is allowed to transmit model data related to a split model corresponding to the user equipment to the to-be-cooperated user equipment within a first predetermined time range, and/or the to-be-cooperated user equipment is allowed to transmit model data related to a split model corresponding to the to-be-cooperated user equipment to the user equipment within a second predetermined time range.

18. The electronic apparatus according to claim 1, wherein
the self-state information comprises second channel state information of a sidelink between the user equipment and the other user equipment within a predetermined range of the user equipment.

19. The electronic apparatus according to claim 18, wherein
the processing circuitry is configured to determine that the user equipment is to participate in the federated learning dependently, in a case that there is other user equipment within the predetermined range whose value of second channel state information is greater than a fifth predetermined threshold.

20. The electronic apparatus according to claim 19, wherein
the processing circuitry is configured to determine that the user equipment is to participate in the federated learning independently, in a case that second channel state information corresponding to other user equipment within the predetermined range is all less than or equal to the fifth predetermined threshold.

21. The electronic apparatus according to claim 19 or 20, wherein the second channel state information comprises at least one of a signal to interference and noise ratio SINR, a reference signal received power RSRP, a reference signal received quality RSRQ, and a reference signal received intensity RSRI of the sidelink.

22. The electronic apparatus according to claim 18, wherein
the processing circuitry is configured to determine that the user equipment is to participate in the federated learning dependently, on determining based on the second channel state information that there is other user equipment satisfying the following condition: via a sidelink corresponding to the other user equipment, the user equipment is allowed to transmit model data related to a split model corresponding to the user equipment to the other user equipment within a first predetermined time range, and the other user equipment is allowed to transmit model data related to a split model corresponding to the other user equipment to the user equipment within a second predetermined time range.

23. The electronic apparatus according to claim 18, wherein
the processing circuitry is configured to determine that the user equipment is to participate in the federated learning independently, on determining based on the second channel state information that there is no other user equipment satisfying the following condition: via a sidelink corresponding to the other user equipment, the user equipment is allowed to transmit model data related to a split model corresponding to the user equipment to the other user equipment within a first predetermined time range, and the other user equipment is allowed to transmit model data related to a split model corresponding to the other user equipment to the user equipment within a second predetermined time range.

24. The electronic apparatus according to any one of claims 1 to 23, wherein
the processing circuitry is configured to transmit information about the federated learning to the user equipment and a to-be-cooperated user equipment for cooperative training with the user equipment, on determining that the user equipment is to participate in the federated learning dependently and the to-be-cooperated user equipment is selected.

25. The electronic apparatus according to claim 24, wherein
the processing circuitry is configured to broadcast, to the user equipment and the to-be-cooperated user equipment, the to-be-trained model and a split point for splitting the to-be-trained model and obtaining the split model.

26. The electronic apparatus according to claim 24, wherein the processing circuitry is configured to:
transmit, to the user equipment, a split model corresponding to the user equipment; and transmit, to the to-be-cooperated user equipment, a split model corresponding to the to-be-cooperated user equipment.

27. the electronic apparatus according to any one of claims 24 to 26, wherein the processing circuitry is configured to notify the user equipment and the to-be-cooperated user equipment to report trained split models respectively, and the trained split models are spliced by the electronic apparatus to obtain a trained complete model.

28. The electronic apparatus according to any one of claims 24 to 26, wherein the processing circuitry is configured to notify the user equipment or the to-be-cooperated user equipment to: splice trained split models to obtain a trained complete model, and report the trained complete model to the electronic apparatus.

29. The electronic apparatus according to any one of claims 24 to 28, wherein the processing circuitry is configured to notify the user equipment and the to-be-cooperated user equipment of information about a sidelink between the user equipment and the to-be-cooperated user equipment.

30. An electronic apparatus for wireless communications, comprising
processing circuitry configured to:
report self-state information of the electronic apparatus to a network side apparatus servicing the electronic apparatus, for the network side apparatus to determine, in a federated learning, whether the electronic apparatus is to cooperate with other electronic apparatus to train a split model obtained by splitting a to-be-trained model such that the electronic apparatus is to participate in the federated learning dependently, or the electronic apparatus is to train the to-be-trained model independently such that the electronic apparatus is to participate in the federated learning independently.

31. The electronic apparatus according to claim 30, wherein
the self-state information comprises first channel state information of a link between the electronic apparatus and the network side apparatus.

32. The electronic apparatus according to claim 31, wherein
the first channel state information comprises at least one of a signal to interference and noise ratio SINR, a reference signal received power RSRP, a reference signal received quality RSRQ, and a reference signal received intensity RSRI of an uplink between the electronic apparatus and the network side apparatus.

33. The electronic apparatus according to claim 30, wherein
the self-state information comprises computing and storage capability information of the electronic apparatus.

34. The electronic apparatus according to claim 33, wherein
the computing and storage capability information comprises at least one of a CPU occupancy rate and a memory size of the electronic apparatus.

35. The electronic apparatus according to claim 30, wherein
the self-state information comprises local data information of the electronic apparatus.

36. The electronic apparatus according to claim 35, wherein
the local data information comprises the number of training samples and a sample dimension which are to be used by the electronic apparatus when participating in the federated learning independently.

37. The electronic apparatus according to claim 30, wherein
the self-state information comprises battery level information of the electronic apparatus.

38. The electronic apparatus according to claim 30, wherein
the self-state information comprises location information of the electronic apparatus.

39. The electronic apparatus according to claim 30, wherein
the self-state information comprises mobility information of the electronic apparatus.

40. The electronic apparatus according to claim 39, wherein
the mobility information comprises at least one of a moving speed, a moving direction, and a dwell time of the electronic apparatus.

41. The electronic apparatus according to claim 30, wherein
the self-state information comprises second channel state information of a sidelink between the electronic apparatus and the other electronic apparatus within a predetermined range of the electronic apparatus.

42. The electronic apparatus according to any one of claims 30 to 41, wherein
the processing circuitry is configured to, when participating in the federated learning dependently, perform the following operations a predetermined number of times on a first split model corresponding to the electronic apparatus in each round of global training of the federated learning to obtain a trained first split model:

transmitting first data obtained by training the first split model to a cooperating electronic apparatus that performs cooperative training with the electronic apparatus, and
updating the first split model based on second data received from the cooperating electronic apparatus, wherein the second data is obtained by the cooperating electronic apparatus training a second split model corresponding thereto based on the first data.

43. The electronic apparatus according to claim 42, wherein

the processing circuitry is configured to report the trained first split model to the network side apparatus, for the network side apparatus to splice the trained first split model with the trained second split model received from the cooperating electronic apparatus to obtain a trained complete model,
wherein the trained second split model is obtained by the cooperating electronic apparatus training the second split model in the global training.

44. The electronic apparatus according to claim 42, wherein the processing circuitry is configured to splice the trained first split model and the trained second split model to obtain a trained complete model, and report the trained complete model to the network side apparatus,
wherein the trained second split model is obtained by the cooperating electronic apparatus training the second split model in the global training.

45. An electronic apparatus for wireless communications, comprising
processing circuitry configured to:
report self-state information of the electronic apparatus to a network side apparatus servicing the electronic apparatus, for the network side apparatus to determine, in a federated learning, whether the electronic apparatus is able to cooperate with other electronic apparatus to train a split model obtained by splitting a to-be-trained model such that the other electronic apparatus is to participate in the federated learning dependently, or the other electronic apparatus is to train the to-be-trained model independently such that the other electronic apparatus is to participate in the federated learning independently.

46. The electronic apparatus according to claim 45, wherein
the self-state information comprises third channel state information of a link between the electronic apparatus and the network side apparatus.

47. The electronic apparatus according to claim 46, wherein
the third channel state information comprises at least one of a signal to interference and noise ratio SINR, a reference signal received power RSRP, a reference signal received quality RSRQ, and a reference signal received intensity RSRI of an uplink between the electronic apparatus and the network side apparatus.

48. The electronic apparatus according to claim 45, wherein
the self-state information comprises computing and storage capability information of the electronic apparatus.

49. The electronic apparatus according to claim 48, wherein
the computing and storage capability information comprises at least one of a CPU occupancy rate and a memory size of the electronic apparatus.

50. The electronic apparatus according to claim 49, wherein
the self-state information comprises local data information of the electronic apparatus.

51. The electronic apparatus according to claim 50, wherein
the local data information comprises the number of training samples and a sample dimension which are to be used by the electronic apparatus when participating in the federated learning independently.

52. The electronic apparatus according to claim 45, wherein
the self-state information comprises battery level information of the electronic apparatus.

53. The electronic apparatus according to claim 45, wherein
the self-state information comprises location information of the electronic apparatus.

54. The electronic apparatus according to claim 45, wherein
the self-state information comprises mobility information of the electronic apparatus.

55. The electronic apparatus according to claim 54, wherein
the mobility information comprises at least one of a moving speed, a moving direction, and a dwell time of the electronic apparatus.

56. The electronic apparatus according to claim 45, wherein
the self-state information comprises fourth channel state information of a sidelink between the electronic apparatus and the other electronic apparatus within a predetermined range of the electronic apparatus.

57. The electronic apparatus according to any one of claims 45 to 56, wherein
the processing circuitry is configured to, when the other electronic apparatus is participating in the federated learning dependently, perform the following operations a predetermined number of times on a second split model corresponding to the electronic apparatus in each round of global training of the federated learning to obtain a trained second split model:

receiving, from the other electronic apparatus, first data obtained by training a first split model corresponding to the other electronic apparatus, and
training the second split model based on the first data to obtain second data, and transmitting the second data to the other electronic apparatus for the other electronic apparatus to update the first split model.

58. The electronic apparatus according to claim 57, wherein

the processing circuitry is configured to report the trained second split model to the network side apparatus, for the network side apparatus to splice the trained second split model with the trained first split model received from the other electronic apparatus to obtain a trained complete model,
wherein the trained first split model is obtained by the other electronic apparatus training the first split model in the global training.

59. The electronic apparatus according to claim 57, wherein the processing circuitry is configured to splice the trained second split model and the trained first split model to obtain a trained complete model, and report the trained complete model to the network side apparatus,
wherein the trained first split model is obtained by the other electronic apparatus training the first split model in the global training.

60. A wireless communication system, comprising:

the electronic apparatus according to any one of claims 1 to 29,
the electronic apparatus according to any one of claims 30 to 44, and
the electronic apparatus according to any one of claims 45 to 59.

61. A method for wireless communications, comprising: determining based on self-state information reported by a user equipment within a service scope of an electronic apparatus, in a federated learning, whether the user equipment is to cooperate with other user equipment to train a split model obtained by splitting a to-be-trained model such that the user equipment is to participate in the federated learning dependently, or the user equipment is to train the to-be-trained model independently such that the user equipment is to participate in the federated learning independently.

62. A method for wireless communications, comprising: reporting self-state information of an electronic apparatus to a network side apparatus servicing the electronic apparatus, for the network side apparatus to determine, in a federated learning, whether the electronic apparatus is to cooperate with other electronic apparatus to train a split model obtained by splitting a to-be-trained model such that the electronic apparatus is to participate in the federated learning dependently, or the electronic apparatus is to train the to-be-trained model independently such that the electronic apparatus is to participate in the federated learning independently.

63. A method for wireless communications, comprising: reporting self-state information of an electronic apparatus to a network side apparatus servicing the electronic apparatus, for the network side apparatus to determine, in a federated learning, whether the electronic apparatus is able to cooperate with other electronic apparatus to train a split model obtained by splitting a to-be-trained model such that the other electronic apparatus is to participate in the federated learning dependently, or the other electronic apparatus is to train the to-be-trained model independently such that the other electronic apparatus is to participate in the federated learning independently.

64. A computer-readable storage medium storing computer-executable instructions, wherein the computer-executable instructions, when executed, implements the method for wireless communications according to any one of claims 61 to 63.

**100**

Processing unit **101**

Figure 1

Base station

Global update
$w^{t+1}$

$w^{t+1} = \sum_{k=1}^{K} p_k w_k^{t+1}$

Global update
$w^{t+1}$

Global update
$w^{t+1}$

Global update
$w^{t+1}$

Global update
$w^{t+1}$

Local update
$w_1^t$

Local update
$w_3^t$

Local update
$w_k^t$

Data

Device 1

Device 2

Device 3

Device K-1

Device K

Local model
update

Figure 2

Complete to-be-trained model

Figure 3

$$m = 0 \quad m = 1 \quad m = 2 \quad m = 3 \quad m = 4 \quad m = M$$

Figure 4

Figure 5

**600**

Communication unit **601**

Figure 6

**700**

Reporting unit **701**

Figure 7

**S800**

Start — **S802**

Determine based on self-state information reported by a user equipment within a service scope of an electronic apparatus, in a federated learning, whether the user equipment is to cooperate with other user equipment to train a split model obtained by splitting a to-be-trained model such that the user equipment is to participate in the federated learning dependently, or the user quipment is to train the to-be-trained model eindependently such that the user equipment is to participate in the federated learning independently — **S804**

End — **S806**

Figure 8

S900

Start ⟿ **S902**

Report self-state information of an electronic
apparatus to a network side apparatus
servicing the electronic apparatus, for the
network side apparatus to determine, in a
federated learning, whether the electronic
apparatus is to cooperate with other
electronic equipment to train a split model
obtained by splitting a to-be-trained model
such that the electronic equipment is to
participate in the federated learning
dependently, or the electronic equipment is
to train the to-be-trained model independently
such that the electronic equipment is to
participate in the federated learning
independently

⟿ **S904**

End ⟿ **S906**

Figure 9

**S1000**

Start — S1002

Report self-state information of an electronic apparatus to a network side apparatus servicing the electronic apparatus, for the network side apparatus to determine, in a federated learning, whether the electronic apparatus is able to cooperate with other electronic apparatus to train a split model obtained by splitting a to-be-trained model such that the other electronic apparatus is to participate in the federated learning dependently, or the other electronic apparatus is to train the to-be-trained model independently such that the other electronic apparatus is to participate in the federated learning independently — S1004

End — S1006

Figure 10

800

810   810   820

825

RADIO COMMUNICATION I/F

827   826

RF   BB

827   826

RF   BB

821

CONTROLLER

824

823   822

NETWORK
I/F   MEMORY

Figure 11

Figure 12

Figure 13

Figure 14

Figure 15

## INTERNATIONAL SEARCH REPORT

| International application No. |
|---|
| **PCT/CN2024/083483** |

**A. CLASSIFICATION OF SUBJECT MATTER**

G06N3/08(2023.01)i; G06N3/04(2023.01)i

According to International Patent Classification (IPC) or to both national classification and IPC

**B. FIELDS SEARCHED**

Minimum documentation searched (classification system followed by classification symbols)

IPC: G06N

Documentation searched other than minimum documentation to the extent that such documents are included in the fields searched

Electronic data base consulted during the international search (name of data base and, where practicable, search terms used)

CNKI, IEEE, CNABS, VEN, CNTXT, WOTXT, USTXT, EPTXT: 联合学习, 联邦学习, 模型, 拆分, 分割, 分层, 训练, 设备, 装置, 性能, 能力, 带宽, 信道, 时间, federal learning, federated learning, FL, model, partition, layer, segment+, train, device, capability, performance, bandwidth, channel, time

**C. DOCUMENTS CONSIDERED TO BE RELEVANT**

| Category* | Citation of document, with indication, where appropriate, of the relevant passages | Relevant to claim No. |
|---|---|---|
| Y | US 2023016827 A1 (RAKUTEN MOBILE, INC.) 19 January 2023 (2023-01-19) description, paragraphs 22-69 and 84 | 1-64 |
| Y | WO 2022169136 A1 (SAMSUNG ELECTRONICS CO., LTD.) 11 August 2022 (2022-08-11) description, paragraphs 66-81 | 1-64 |
| Y | CN 114925852 A (NANJING UNIVERSITY) 19 August 2022 (2022-08-19) description, paragraphs 13-50 | 12-23 |
| A | CN 114912605 A (XIDIAN UNIVERSITY) 16 August 2022 (2022-08-16) entire document | 1-64 |
| A | CN 113010305 A (BEIJING UNIVERSITY OF POSTS AND TELECOMMUNICATIONS) 22 June 2021 (2021-06-22) entire document | 1-64 |

☐ Further documents are listed in the continuation of Box C.　　☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **05 June 2024** | **21 June 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/083483**

| Patent document cited in search report | | | Publication date (day/month/year) | Patent family member(s) | | | Publication date (day/month/year) |
|---|---|---|---|---|---|---|---|
| US | 2023016827 | A1 | 19 January 2023 | WO | 2023282991 | A1 | 12 January 2023 |
| WO | 2022169136 | A1 | 11 August 2022 | EP | 4036806 | A1 | 03 August 2022 |
| | | | | US | 2022245459 | A1 | 04 August 2022 |
| | | | | CN | 116830122 | A | 29 September 2023 |
| CN | 114925852 | A | 19 August 2022 | | None | | |
| CN | 114912605 | A | 16 August 2022 | WO | 2023185485 | A1 | 05 October 2023 |
| CN | 113010305 | A | 22 June 2021 | | None | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310342408